# EUROPÄISCHE PATENTANMELDUNG

(11) **EP 4 699 446 A1**
(43) Veröffentlichungstag der Anmeldung: **25.02.2026**
(21) Anmeldenummer: 25197124.8
(22) Anmeldetag: 20.08.2025
(51) Int. Cl.: A21B 3/15

(54) **BACKBLECH**

(30) Priorität: 20.08.2024 DE 102024123742
(71) Anmelder: Kempf, Axel, 85296 Rohrbach (DE); Stadler, Marion, 85296 Rohrbach (DE)
(72) Erfinder: Kempf, Josef, 85296 Rohrbach (DE)
(74) Vertreter: HGF

(57) **Zusammenfassung**

Die Erfindung betrifft ein Backblech für industriell betriebene Backanlagen umfassend einen Rahmen und ein Inlay. Das Backblech zeichnet sich dadurch aus, dass der Rahmen eine Gefache aus mehreren Quer- und Längsstreben zur Stützung des Inlays aufweist.

## Beschreibung

Die vorliegende Erfindung betrifft ein Backblech für industriell betriebene Backanlagen, insbesondere Backstraßen oder industrielle Backkammern.

Industriell betriebene Backanalgen, wie z.B. eine Backstraße, sind bspw. aus der EP 0710441 B1 bekannt. Eine Backstraße ist eine tunnelförmige Anlage, an welcher an einer Eingangsseite ein Backblech, das mit rohem Backgut bestückt ist, eingeführt wird. Das Backblech wird dann durch die Backstraße gefahren, in welcher ein vorbestimmtes Temperaturprofil vorliegt, sodass die Backware gebacken wird. An der Ausgangsseite der Backstraße wird das Backblech entnommen und oftmals einer Kühl- bzw. Gefriereinrichtung zugeführt, sodass die frischgebackene Backware möglichst umgehend eingefroren bzw. schockgefrostet wird. Die Backwaren können vor dem Tiefkühlen vom Backblech entfernt werden. In der Regel wird jedoch das Backblech zusammen mit der Backware nach einer kurzen Abkühlphase unmittelbar einer Gefrierstation zugeführt, sodass die Backware auf dem Backblech tiefgefroren wird.

Diese Backbleche bestehen in der Regel aus einem Rahmen und einem Inlay, das in der Regel ein Lochblech ist. Der Rahmen ist üblicherweise aus vier Edelstahlstreben ausgebildet, die im Eckbereich miteinander verschweißt sind. Das Inlay ist mittels Nieten am Rahmen befestigt. Die Backbleche für industriell betriebene Backanlagen bzw. Backöfen weisen in der Draufsicht eine Rechteckform auf. Das Inlay ist zum Beispiel aus einem Aluminiummaterial hergestellt. Dieser Aufbau weist jedoch eine Reihe von Nachteilen auf, da der Edelstahlrahmen und das Inlay, da sie aus unterschiedlichen Materialien gefertigt sind, unterschiedliche Wärmeausdehnungen aufweisen, was gegebenenfalls zu einem unerwünschten Ausbeulen des Inlays und Lösen der Nieten führt. Ein solches Backblech stellt den aktuellen Industriestandard dar und wiegt etwa 16, 4 kg (10,5 kg VA-Stahl und 5,9 kg Aluminium).

Die Inlays müssen in regelmäßigen Abständen (etwa 1 Jahr bis 1,5 Jahre) erneuert werden, da sich durch die regelmäßige Hitzebehandlung die beschichtete Oberfläche abgenützt hat. Die Inlays sind zum Teil mit Anti-Haftschichten (insbesondere aus PTFE) versehen, die mit der Zeit degradieren. Auf der Oberfläche der Inlays können sich auch Teigreste einbrennen. Bei einem Wechsel eines Inlays werden diese vom Rahmen getrennt. Im Rahmen werden neue Löcher gebohrt, um das neue Inlay wieder mit Nieten am Rahmen befestigen zu können. Mit einem solchen Rahmen können in der Regel etwa fünf Inlays verwendet werden. Danach sind am Rahmen so viele Löcher eingebracht, dass der Rahmen nicht mehr weiter gebrauchbar ist.

Aus der EP 2 394 514 A1 ist ein Backblech für industriell betriebene Backanlagen bekannt, mit einem das Inlay des Backblechs von einer Unterseite her abstützenden Stabilisier- und/oder Tragrahmen, der mit dem Inlay mittels wenigstens einer Fixiereinrichtung verbunden ist. Die Fixiereinrichtung ist durch eine Schiebeführung gebildet, mittels der das Inlay auf den Stabilisier- und/oder Tragrahmen aufschiebbar ist. Hierdurch kann das Inlay einfach und schnell ausgetauscht werden und der Stabilisier- und/oder Tragrahmen kann beliebig viele Zyklen verwendet werden.

In der WO 2023/037351 A1 ist ein weiteres Backblech beschrieben, das ein austauschbares Inlay aufweist, das mittels Klammern an einem Stützrahmen befestigbar ist. Das Inlay kann ebenflächig ausgebildet sein. Es kann aber auch mit parallel zueinander verlaufenden Mulden versehen sein.

Aus der EP 2708129 B1 geht ein weiteres Backblech hervor, bei dem das Inlay durch Bördeln oder Crimpen von am Inlay ausgebildeten Laschen um einen Vorsprung am Stützrahmen an diesem befestigt werden. Das Backblech kann ebenflächig oder als Muldenbackblech ausgebildet sein.

Ein weiteres Muldenbackblech geht aus der WO 2015/044588 A1 hervor, bei dem zwischen den einzelnen Mulden jeweils ein Schlitz ausgebildet ist.

Aus der US 2022/0322682 A1 geht ein Muldenbackblech hervor, bei dem ein Inlay schwimmend auf einem Tragrahmen angeordnet ist. Das Inlay bildet eine Reihe paralleler Mulden aus. Die nach oben vorstehenden Bereiche zwischen den einzelnen Mulden werden jeweils von einer Traverse eines Stützrahmens unterstützt. Das Inlay ist aus einem Streckmetallblech mit Mikroöffnungen ausgebildet, die ein Metallgitter bilden. Das Streckmetallblech wird durch Schneiden und Strecken eines Metallblechs hergestellt. Die Mikroöffnungen haben Durchgangsöffnungen zwischen 130 und 750 µm. Aufgrund der Mikroöffnungen weist das Streckmetallblech eine Öffnungsfläche auf, die zwischen 17 und 60 % der Gesamtoberfläche des Blechs ausmacht.

In der US 2017/0318820 A1 ist ein weiteres Muldenbackblech offenbart, das mit einem Fluorharzfilm mit einer Dicke von 75 bis 500 µm durch Wärmebindung auf ein Metallsubstrat 1 laminiert ist und in das eine viele Löcher gestanzt sind. Das Backblech soll ausgezeichnete Trenneigenschaften aufweisen, da der Teig während eines Brotbackvorgangs nur mit der Fluorharzfolie in Kontakt kommt.

Ein weiteres Muldenbackblech ist aus der WO 2005/092007 A2 bekannt, das aus einem wellig geformten Blech und zwei an Stirnseiten des Bleches befestigten Leisten ausgebildet ist.

In der EP 2 014 171 B1 ist ein Muldenbackblech gezeigt, das spezielle Sicherungselemente zum Befestigen eines Inlays an einen Rahmen aufweist.

In der WO 2005/3430 A1 ist ein Backblech offenbart, das eine Vielzahl von Öffnungen mit einer Fläche zwischen 0,07 mm² und 1,77 mm² aufweist, wobei Öffnungsfläche von zwischen 9 und 30 Prozent der Oberfläche des Blechs vorgesehen ist. Die Öffnungen bestehen vorzugsweise aus Mikroperforationen, die gleichmäßig über den perforierten Teil des Blechs verteilt sind und eine im Wesentlichen kreisförmige Form mit einem Durchmesser zwischen 0,30 und 1,5 mm aufweisen.

Die WO 2009/123451 A1 offenbart ein Backblech das am Randbereich möglichst ebenflächig abschließt, so dass es einfach und zuverlässig gereinigt werden kann.

Die EP 2826373 A1 betrifft ein Inlay für ein Backblech aus einem feueraluminierten Stahlblech und einer das Inlay aufnehmenden Trageinrichtung aus einem keramischen Werkstoff, der eine geringere Wärmeleitfähigkeit als das Stahlblech des Backblechs aufweist. Ein solches Backblechen erlaubt einen energieeffizienten Einsatz und ist gleichzeitig für den großindustriellen Einsatz geeignet.

Die FR 2097608 A5 offenbart ein Backform zum Formen von Brot- oder Kuchenteig bestehend aus einem Netz aus Glasfasern, das zu mindestens 50 % belüftet und mit Silikonkautschuk imprägniert ist. Die Backform ist leichter, handlicher und poröser als Backbleche, die mit einer PTFE-Schicht oder einem mit Silikongummi behandelten Gewebe versehen sind. Die Formen haben vorzugsweise die Form von aufeinanderfolgenden Gestellen, die von einem Rahmen oder Gestell getragen werden, und bestehen aus einem Glasfasergewebe von ca. 1-3 min.

In dem deutschen Gebrauchsmuster DE 20 2013 004 320 U1 ist ein als Einschubblech ausgebildetes Backblech beschrieben, bei dem ein backblechseitiger Auflagebereich aus einem abriebfesten und rostfreien Edelstahl ausgebildet ist.

Das deutschen Gebrauchsmuster DE 20 2010 007 826 U1 zeigt ein Backblech für industriell betriebene Backanlagen, mit einem das Inlay, das mit einem von einer Unterseite her abstützenden Rahmen verbunden ist. Das Inlay weist ein an der Unterseite abstehendes Eingriffselement auf, welches im auf den Rahmen aufgesetzten Zustand in Teilbereichen formschlüssig in den Rahmen eingreift und/oder welches den Rahmen wenigstens in Teilbereichen von außen her im Wesentlichen formschlüssig umgreift. Das Eingriffselement kann mit Langlöchern versehen sein, in welche Nieten zum Verbinden des Inlays mit dem Rahmen eingesetzt sind.

Die DE 10230952 A1 beschreibt einen Backguträger, der ein Trägerelement und Drahtgeflecht-element umfasst. Das Trägerelement kann aus einem an sich herkömmlichen emaillierten Backblech gebildet werden, in das Öffnungen ausgestanzt werden, so dass hierdurch Stege zwischen den Öffnungen entstehen. Auf das Trägerelement wird dann ein Drahtgeflechtelement aufgelegt bzw. eingelegt, das aus Metall, beispielsweise aus Edelstahl entsprechend einem herkömmlichen Küchen- oder Haushaltssieb gefertigt ist. Der Aufbau stellt zunächst sicher, dass fließfähiges Backgut, wie etwa eine flüssige Teigmasse, von dem Drahtgeflechtelement vom Abtropfen zurückgehalten wird. Weiterhin erlauben die Öffnungen im Drahtgeflecht, dass ein verbesserter Wärmeaustausch stattfindet und damit die Backzeit verkürzt und das Backergebnis verbessert werden kann.

Die DE 9114841 U1 betrifft ein Backblech aus Edelstahl, das aus einem flachgewalzten Streckgitter gefertigt ist, das rautenförmige Öffnungen und entsprechende Stege zeigt, die die Öffnungen umgeben. Weiterhin werden Sicken auf dem Backblech gebildet, wo das Backblech ungestreckt ist. Die Sicken verlaufen nur quer zur Streckrichtung. Ein Rahmen wird durch vier Rahmenstege gebildet, die aus Edelstahlblech gefertigt sind, das eine Wandstärke von 1.8 bis 2.5mm aufweist.

In dem deutschen Gebrauchsmuster DE 8701983 U1 wird ein Backwarenträger beschrieben, mit dem eine verbesserte Behandlung von Teiglingen beim Einfrieren und Auftauen erreicht werden soll. Vorgeschlagen wird ein Lochblech aus Metall, insbesondere Aluminium, zu verwenden, wodurch zudem Energie eingespart werden soll. Über das Lochblech wird ein Gewebe gelegt und an den Seiten umgeschlagen, so dass ein äußerer Rahmen von außen das Gewebe einzwängen und halten kann.

Der Erfindung liegt die Aufgabe zugrunde, ein Backblech zu schaffen, das einen sehr effizienten Betrieb, insbesondere in einer Backstraße, erlaubt.

Eine weitere Aufgabe der Erfindung ist es, ein Backblech zu schaffen, das eine lange Lebensdauer besitzt.

Eine weitere Aufgabe ist es, ein Backblech zu schaffen, das einfach zu handhaben und zu warten ist.

Eine oder mehrere der Aufgaben werden durch ein Backblech gemäß einem der unabhängigen Patentansprüche gelöst. Vorteilhafte Ausgestaltungen sind in den hiervon abhängigen Ansprüchen aufgeführt.

Nach einem ersten Aspekt der vorliegenden Erfindung wird ein Backblech für industriell betriebene Backanlagen vorgesehen, das einen Rahmen und ein Inlay umfasst. Das Backblech zeichnet sich dadurch aus, dass der Rahmen ein Gefache aus mehreren Quer- und Längsstreben zur Stützung des Inlays aufweist.

Durch ein solches Gefache aus mehreren Quer- und Längsstreben kann das Inlay von unten gestützt werden. Ein solches Gefache erlaubt somit die Verwendung von dünnwandigen Inlays, welche weniger stabil als herkömmliche Inlays sind. Durch die regelmäßige Abstützung durch die Quer- und Längsstreben wird verhindert, dass sich das Inlay auch bei Beladung mit Backware übermäßig durchbiegt. Das Vorsehen eines solchen Gefaches erlaubt somit eine leichte Ausgestaltung des Backbleches. Eine geringe Masse bedeutet auch eine geringe Wärmekapazität. Hierdurch nimmt das Backblech beim Erhitzen wenig Wärme auf. Beim Kühlen in einer Tiefkühleinrichtung muss wenig Kühlleistung aufgewendet werden. Dies bewirkt in einer industriellen Produktion von Backwaren eine erhebliche Reduktion des Energieverbrauches. Zudem erhitzt sich das Backblech und insbesondere das Inlay wesentlich schneller, oder kühlt sich wesentlich schneller ab als ein herkömmliches Backblech, wodurch der Back- und Kühlprozess beschleunigt wird. Zudem können im Vergleich zu herkömmlichen Backblechen steilere Temperaturrampen gefahren werden, welche sich bei bestimmten Backwaren vorteilhaft auf dem Backprozess auswirken.

Die Querstreben sind vorzugsweise nicht mehr als 40 cm und die Längsstreben vorzugsweise nicht mehr als 30 cm von der nächsten benachbarten Strebe beabstandet. Hierdurch wird das Inlay im Vergleich zu herkömmlichen Backblechen sehr kleinteilig unterstützt. Nur kleine Segmente des Inlays können sich frei durchbiegen, wodurch die absolute Durchbiegung erheblich reduziert wird. Die Querstreben sind vorzugsweise nicht mehr als 30 cm von der nächsten benachbarten Querstrebe beabstandet. Die Längsstreben sind vorzugsweise nicht mehr als 25 cm, insbesondere nicht mehr als 20 cm von der nächsten benachbarten Strebe beabstandet.

### Das Inlay kann

aus einem Lochblech aus Aluminium oder einer Aluminiumlegierung mit einer Dicke von nicht mehr als 1,2 mm, insbesondere nicht mehr als 1,15 mm und vorzugsweise nicht mehr als 1,1 mm bzw. nicht mehr als 1,0 mm, oder
aus einem Streckmetall aus Aluminium oder einer Aluminiumlegierung, oder aus einem Gitternetz ausgebildet sein.

Derartige Inlays sind im Vergleich zu herkömmlichen Inlays sehr leicht und weisen in Verbindung mit dem oben erläuterten Gefache die nötige Stabilität auf, um die Backwaren zuverlässig zu halten und sicher durch einen industriellen Backofen zu transportieren. Sowohl das Lochblech als auch das Streckmetall sind aus Aluminium oder einer Aluminiumlegierung ausgebildet. Aluminium bzw. eine Aluminiumlegierung ist ein sehr guter Wärmeleiter und es hat sich in der Praxis gezeigt, dass derartige Inlays eine gute Qualität an Backprodukten erlauben. Ein Inlay aus einem Gitternetz kann noch leichter als das Lochblech oder das Streckmetall ausgebildet sein. Ein Gitternetz weist in der Regel auch einen sehr großen Anteil an Öffnungen an der Gesamtfläche auf, wodurch eine sehr gute Erhitzung der Backware von unten erzielt wird.

Das Gitternetz kann ein eigensteifes Gitternetz, das beispielsweise aus Drähten gebildet ist, oder ein flexibles Gitternetz sein. Ein solches flexibles Gitternetz wird vorzugsweise unter Spannung im Backblech angeordnet, sodass es bei Beladung nur geringfügig durchbiegt.

Ein flexibles Gitternetz kann aus nicht-metallischen Filamenten ausgebildet sein. Die nicht-metallischen Filamente können Fasern aufweisen, die in einem Kunststoff eingebettet sind.

Als Fasern können Glasfaser oder mineralische Fasern, wie zum Beispiel Siliziumcarbidfasern, vorgesehen sein. Die Fasern können im Filament zueinander parallel verlaufen. Ein solcher Faserstrang wird als Roving bezeichnet. Die mehreren Fasern können jedoch auch miteinander geflochten sein. Ein solcher Faserstrang wird als Yarn bezeichnet. Die mehreren Fasern sind vorzugsweise in einem temperaturstabilen Kunststoff, wie zum Beispiel PTFE, Silikon oder Epoxy eingebettet bzw. imprägniert. Die Filamente sind somit aus einem faserverstärkten Verbundmaterial ausgebildet, das eine hohe Zugfestigkeit aufweist. Hierdurch können dünne Filamente unter hoher Spannung im Backblech angeordnet sein und können bei sehr geringem Gewicht und geringer Flächenbeanspruchung eine hohe Festigkeit zum Stützen der Backwaren von unten aufweisen.

Die Quer- und/oder Längsstreben des Gefaches können jeweils aus einer Metall- oder Kunststoffstrebe mit einem vorbestimmten Profil ausgebildet sein, wobei die Profile ein I-Profil, L-Profil, U-Profil oder ein Rundprofil sein können. Ein Stab in Form eines Rundprofils, der ein Vollkörper ist, wird auch als Draht bezeichnet. Das Rundprofil weist in der Regel einen kreisförmigen Querschnitt auf, kann jedoch auch eine von der Kreisform etwas abweichen Querschnitt, wie zum Beispiel einen elliptischen oder ovalen Querschnitt oder ähnliche einem Flachdraht ein Querschnitt mit zwei kreisförmigen Segmenten, welche mittels eines Quaderförmigen Abschnitt verbunden sind, aufweisen. Die Profile sind vorzugsweise so ausgebildet und im Backblech angeordnet, dass sie insbesondere bei einer Belastung senkrecht auf der Ebene des Backbleches eine hohe Steifigkeit besitzen. Sie weisen daher vor allem in der Richtung senkrecht zur Ebene des Backbleches bzw. zur Ebene des Inlays eine größere Erstreckung als quer zur Längsrichtung der jeweiligen Strebe auf. Die Erstreckung in der Richtung senkrecht zur Ebene des Backbleches beträgt vorzugsweise mindestens das Doppelte oder insbesondere mindestens das 3-fache als quer zur Längsrichtung.

Die Streben können auch aus hohlen und damit rohrförmigen Profilen ausgebildet sein. Im Vergleich zu einem Stab, der ein Vollkörper ist, sind solche rohrförmigen Profile leichter. Die Quer- und Längsstreben können an ihren Kreuzungspunkten miteinander verbunden bzw. verschränkt sein. Eine Verbindung kann beispielsweise mittels einer stoffschlüssigen Verbindung, wie zum Beispiel Löten oder Schweißen ausgebildet sein. Bei der Verschränkung weist zumindest eine der Quer- und/oder Längsstreben am jeweiligen Kreuzungspunkt eine Ausnehmung auf, in welcher die andere der Quer- und/oder Längsstreben am jeweiligen Kreuzungspunkt etwa formschlüssig aufgenommen ist. Vorzugsweise ist eine solche Ausnehmung sowohl an der Quer- als auch an der Längsstrebe des jeweiligen Kreuzungspunktes ausgebildet.

Insbesondere sind die Querstreben aus einem L-Profil und der Längsstreben aus einem Rundprofil (= Draht aus einem Vollkörper) oder die Längsstreben aus einem L-Profil und die Querstreben aus einem Rundprofil (= rohrförmiges Rundprofil oder Draht aus Vollkörper) ausgebildet.

Es können jedoch auch die Quer- und/oder Längsstreben jeweils aus einem Rundprofil ausgebildet sein, oder die Quer- und/oder Längsstreben jeweils aus einem Streifen bzw. I-Profil ausgebildet sein, wobei die I-Profile an den jeweiligen Kreuzungspunkten Schlitze aufweisen, sodass die an den Kreuzungspunkten kreuzenden I-Profile zueinander verschränkt sind.

Das Gefache aus mehreren Quer- und Längsstreben kann in mehrere Segmente unterteilt sein, wobei die Quer- und Längsstreben eines jeden Segmentes miteinander verbunden sind und einen einteiligen Körper bilden.

Ein solches in Segmente unterteiltes Gefache kann einfach und kostengünstig hergestellt werden. Insbesondere kann ein solches Gefache aus Kunststoff ausgebildet sein, wobei die einzelnen Segmente des Gefaches mit einem Spritzgießverfahren hergestellt werden.

Backbleche für industrielle Backstraßen sind in der Draufsicht plattenförmige, rechteckige Körper mit einer Länge von etwa 2 m und einer Breite von etwa 75 cm bis 1 m. Die Backbleche können in unterschiedlichen Größen ausgebildet sein und eine Breite von zumindest 0,6 m und/oder eine Länge von zumindest 0,8 und insbesondere von zumindest 1,5 m aufweisen.

Die Breitseitenwandung des Rahmens weist vorzugsweise eine Breite von zumindest 20 mm, insbesondere zumindest 25 mm bzw. zumindest 30 mm und/oder die Breitseitenwandung des Rahmens weist zumindest eine Breite von zumindest 5 mm und insbesondere zumindest 10 mm und vorzugsweise nicht mehr als 20 mm und insbesondere nicht mehr als 15 mm auf.

Eine solche Geometrie verleiht dem Rahmen eine hohe Steifigkeit gegenüber Belastungen, welche senkrecht auf die Ebene des Inlays ausgeübt werden. Zudem kann der Rahmen aufgrund der schmalen Schmalseitenwandungen im Vergleich zu herkömmlichen Rahmen leicht ausgebildet sein. Vorzugsweise ist der Rahmen aus Stahl ausgebildet.

Der Rahmen kann aus einem einteiligen umlaufenden Metallrohr ausgebildet sein. Das Metallrohr ist an den Eckbereichen gebogen. Für eine solche Ausgestaltung ist ein Profil mit Breitseitenwandungen, die um ein Vielfaches größer als die Schmalseitenwandungen sind, von Vorteil. Solche "gebogenen Ecken" sind sehr steif und verleihen dem Rahmen eine hohe Festigkeit. Das umlaufende Metallrohr ist vorzugsweise im Bereich einer der Längsstreben mit seinen Enden stoffschlüssig durch Schweißen oder Löten verbunden, wobei die Verbindungsstelle vorzugsweise mehr als 10 cm und insbesondere mehr als 20 cm von der nächsten Ecke entfernt ist.

Anstelle eines umlaufenden Metallrohrs kann der Rahmen auch aus mehreren geradlinigen Rahmenabschnitten ausgebildet sein, wobei an den Ecken des Rahmens jeweils eine sogenannte Stapelecke vorgesehen ist. Eine solche Stapelecke ist ein massiver, etwa quaderförmiger Körper mit einer Bodenseite und einer Deckenseite, wobei die Bodenseite an der Unterseite des Rahmens angeordnet ist und die Deckenseite an der Oberseite des Rahmens angeordnet ist. An der Deckenseite ist ein nach oben vorstehender Zapfen ausgebildet und die Bodenseite weist eine Ausnehmung zur Aufnahme des Zapfens auf. Der Zapfen weist eine etwa konische Form auf, sodass beim Aufeinander-Anordnen von mehreren Stapelecken die Zapfen in die entsprechende Ausnehmung eingreifen und sich selbst zentrieren. Selbstverständlich kann auch die Ausnehmung mit einer konische Form ausgebildet sein und der Zapfen kann dann konisch oder nicht konisch ausgebildet sein. An einer solchen Stapelecke sind jeweils zwei Rahmenabschnitte im rechten Winkel zueinander, beispielsweise mittels einer stoffschlüssigen Verbindung, wie zum Beispiel einer Schweiß- oder Lötverbindung, befestigt. Ein solcher Rahmen besteht somit aus vier Stapelecken und vier Rahmenabschnitten, die sich jeweils zwischen zwei Stapelecken erstrecken.

Die Stapelecken sind entweder stoffschlüssig mit den Längs- und Querstreben des Rahmens oder mittels einer Steckverbindung verbunden, wobei bei einer Steckverbindung entsprechende Steckvorsprünge an den Stapelecken ausgebildet sind.

Das Vorsehen derartiger Stapelecken erlaubt das Stapeln mehrerer Backbleche übereinander, wobei die aufeinander gestapelten Backbleche zueinander ausgerichtet und in ihrer Position fixiert sind. Es können somit eine Vielzahl von Backblechen übereinander gestapelt werden und so sicher und gefahrlos aufbewahrt werden.

Der Anteil der Fläche der Löcher an der Gesamtfläche des Inlays beträgt vorzugsweise zumindest 25 %, insbesondere zumindest 35 % bzw. zumindest 45 %. Bei einer Unterstützung des Inlays mit dem Gefache ist es sogar möglich den Anteil der Fläche der Löcher an der Gesamtfläche auf mindestens 50% bzw. mindestens 55% zu erhöhen.

Das Inlay kann auch aus einem Streckmetall ausgebildet sein. Das Streckmetall hat einen Öffnungsgrad von vorzugsweise mehr als 50 %, insbesondere mehr als 60 %, und insbesondere mehr als 70 %. Das Streckmetall ist vorzugsweise aus Aluminium oder einer Aluminiumlegierung ausgebildet.

Ein flexibles Gitternetz ist vorzugsweise im Backblech unter Spannung gehalten. Hierdurch kann ein großflächige Backblech mit z.B. mehr als 1 m² und insbesondere mehr als 1,5 m² bereitgesellt werden, das einerseits sehr leicht ist und anderseits die nötige Festigkeit aufweist, eine Vielzahl an Teiglingen zuverlässig aufzunehmen. Ein solches flexibles Gitternetz kann die gewünschten Backwaren aufnehmen ohne zu sehr durchzubiegen und ohne dass die Backwaren aufgrund einer Durchbiegung des Inlays verrutschen.

Je größer der Loch- oder Öffnungsgrad ist, desto besser kann in der Backstraße die heiße Luft von unterhalb des Backbleches an die Backwaren bzw. Teiglinge gelangen. Bei bestimmten Backwaren, ist ein hoher Öffnungsgrad sehr von Vorteil und erhöht die Qualität des Backproduktes. Das Backen kann dann an allen Seiten des Backproduktes bzw. der Backware sehr gleichmäßig erfolgen.

Nach einem weiteren Aspekt der vorliegenden Erfindung ist ein Backblech für industriell betriebene Backanlagen vorgesehen, das einen Rahmen und ein Inlay umfasst. Das Backblech zeichnet sich dadurch aus, dass das Inlay am Rahmen schwimmend gelagert ist.

Eine solche schwimmende Lagerung des Inlays am Rahmen ermöglicht es einerseits, dass das Inlay und der Rahmen aus unterschiedlichen Materialien ausgebildet sein können. Hierdurch können das Inlay und der Rahmen unterschiedlichen thermischen Ausdehnungen unterliegen, ohne dass es zu Verspannungen zwischen dem Inlay und dem Rahmen kommt. Ein weiterer Vorteil der schwimmenden Lagerung liegt darin, dass das Inlay einfach austauschbar ist, insbesondere wenn die schwimmende Lagerung an einer Seite des Rahmens lösbar ausgebildet ist. Dann kann das Inlay am Rahmen durch Verschieben in der Ebene des Backbleches einfach vom Rahmen gelöst und durch ein anderes Inlay ausgetauscht werden.

Bei herkömmlichen industriellen Backblechen sind die Inlays mittels Nieten an den Rahmen befestigt. Beim Austauschen eines Inlays müssen die Nieten gelöst werden und für neue Nieten müssen neue Bohrungen am Rahmen eingebracht werden. Der Austausch von Inlays kann deshalb nur von speziell geschultem Personal vorgenommen werden. In der Praxis bedeutet dies, dass die Backbleche zum Austausch von Inlays an den Hersteller gesendet werden, der diese dann fachmännisch bearbeitet. Ein Austauschen von Inlays ist in der Regel vor Ort nicht möglich. Mit dem erfindungsgemäßen Backblech ist dies möglich, so dass Backbetriebe selbst in der Lage sind, die Inlays auszutauschen, wie es im Folgenden erläutert wird.

Zur Ausbildung einer solchen schwimmenden Lagerung kann der Rahmen an zumindest zwei gegenüberliegenden Streben U-förmige Schienen aufweisen, die mit ihren Öffnungen zueinander weisend ausgerichtet sind. Das Inlay kann mit seinen entsprechenden Randbereichen in den U-förmigen Schienen lagern. Am Rahmen kann ein lösbares Fixierelement angeordnet sein, mit dem das in den U-förmigen Schienen verschieblich gelagerte Inlay fixierbar ist.

Dieses lösbares Fixierelement kann eine lösbare U-förmige Schiene sein, welche mit einer Schraub-, Rast- oder Schnappverbindung am Rahmen fixierbar ist. Das lösbare Fixierelement kann jedoch auch eine Schraub-, Rast- oder Schnappverbindung sein, welche unmittelbar das Inlay am Rahmen fixiert. Im Bereich des Fixierelementes kann dann das Inlay ortsfest, d.h. nicht-schwimmend, befestigt sein, sofern zumindest an zwei gegenüberliegenden Streben des Rahmens vorzugsweise an allen drei weiteren Streben des in der Draufsicht rechteckförmigen Rahmens eine schwimmende Lagerung vorgesehen ist.

Nach einem weiteren Aspekt der vorliegenden Erfindung ist ein Backblech für industriell betriebene Backanlagen vorgesehen, das einen Rahmen und ein Inlay aufweist. Dieses Backblech zeichnet sich dadurch aus, dass das Inlay einen umlaufenden Steckrahmen aufweist, welcher lösbar mit dem Rahmen verbunden ist. Eine solche Ausgestaltung des Backbleches erlaubt ein einfaches Lösen bzw. Fixieren des Inlays am Rahmen. Sowohl das Inlay als auch der Rahmen können unabhängig voneinander einfach gehandhabt werden. Das Inlay kann mit dem Rahmen mittels einer Klemmverbindung, Schraubverbindung oder Rastverbindung befestigt sein. Auch ein solches Inlay kann vor Ort ausgetauscht werden.

Der Steckrahmen kann so ausgebildet sein, dass er an der nach innen weisenden Oberfläche des Rahmens im zusammengesteckten Zustand anliegt und zu dieser nach innen weisenden Fläche eine komplementäre Außenfläche aufweist. Ein solcher Steckrahmen kann auch als Innenrahmen bezeichnet werden, da er innerhalb des eigentlichen Rahmens, den man auch als Hauptrahmen bezeichnen kann, angeordnet ist.

Der Steckrahmen kann jedoch auch so ausgebildet sein, dass er an einer nach außen weisenden Oberfläche des Rahmens bzw. Hauptrahmens formschlüssig anliegt und zu dieser eine komplementäre Form aufweist. Der Steckrahmen kann dann als Außenrahmen bezeichnet werden.

Der Steckrahmen sowohl in Form des Innenrahmens als auch in Form des Außenrahmens kann mit dem Hauptrahmen eine reibschlüssig verbundene Steckverbindung ausbilden, welche vorzugsweise mittels weiterer Verbindungsmittel, wie zum Beispiel der Klemmverbindung, der Schraubverbindung oder der Rastverbindung fixiert sein kann. Es kann jedoch auch ein Spiel zwischen dem Steckrahmen und dem Hauptrahmen vorhanden sein.

Solch ein Steckrahmen macht ein einfaches Austauschen des Inlays am Rahmen bzw. Hauptrahmen möglich, sofern das Inlay mit dem Steckrahmen fest verbunden ist. Zudem kann am Steckrahmen ein flexibles, nicht eigensteifes Inlay vorgesehen sein, das am Steckrahmen unter Spannung angeordnet ist, wobei das Inlay zusammen mit dem Steckrahmen ein einfach und schnell austauschbares Verbrauchsteil ist, das zudem aufgrund des geringen Materialaufwandes kostengünstig bereitgestellt werden kann. Am Steckrahmen kann auch ein Gefache ausgebildet sein, wobei das Inlay dann am Steckrahmen oder auch unabhängig davon ausgebildet sein kann.

Für eine solche Ausbildung des Backblechs mit Steckrahmen und Hauptrahmen ist es vorteilhaft, wenn der Hauptrahmen einen schmalen und hohen Querschnitt aufweist, wie er oben erläutert ist.

Am Steckrahmen können Rastmittel vorgesehen sein, welche mit entsprechenden am Rahmen vorgesehenen Gegenrastmittel zum Fixieren des Steckrahmens am Rahmen zusammenwirken. Die Rastmittel, insbesondere am Steckrahmen, können auch Rastausnehmungen, insbesondere sich in Längsrichtung erstreckende Langlöcher, umfassen und die Gegenrastmittel können federbeaufschlagte Rastvorsprünge, insbesondere federbeaufschlagte Kugeln oder Rastnasen sein, die in die entsprechenden Rastausnehmungen eingreifen können. Hierdurch können die Inlays einfach und wiederholt vom Rahmen gelöst und wieder mit diesem verbunden werden. Bei derartigen Rastverbindungen kann die Verbindung zwischen Inlays und dem Rahmen ohne Spezialwerkzeug einfach gelöst und wiederhergestellt werden. Dies bedeutet, dass die Inlays und die Rahmen auch beispielsweise zum Reinigen derselben einfach voneinander getrennt werden können und die einzelnen Bestandteile des Backbleches unabhängig voneinander einfach gesäubert werden können, wobei alle Flächen frei zugänglich sind.

Bei herkömmlichen Backblechen werden, wie eingangs erläutert, die Inlays vor allem mittels Nieten am Rahmen befestigt. Die Backbleche müssen regelmäßig erneuert werden, wozu die Nietverbindungen gelöst werden und in die entsprechenden Wandungen des Rahmens neue Löcher gebohrt werden, um neue Nieten für neue Inlays setzen zu können. In der Praxis hat sich gezeigt, dass an einem bestimmten Rahmen nicht mehr als fünf oder sechs Inlays befestigt werden können. Danach weist der Rahmen so viele Löcher auf, dass für eine ausreichende Befestigung mittels Nieten kein Platz mehr am Rahmen ist. Hierbei ist zu berücksichtigen, dass derartige herkömmliche Rahmen im Vergleich zu den oben erläuterten schlanken Rahmen wesentlich breiter sind und daher mehr Platz für derartige Nietenlöcher bereitstellen. Mit einer lösbaren Verbindung zwischen dem Inlay und dem Rahmen ist es nicht notwendig, derartige Löcher für Nieten im Rahmen zu bohren. Daher können die Inlays am Rahmen beliebig oft ausgetauscht werden und die Lebenszeit des Rahmens ist diesbezüglich praktisch unbegrenzt. Zudem erlaubt eine solche lösbare Verbindung zwischen dem Inlay und dem Rahmen eine wesentlich schlankere und damit leichtere Ausgestaltung des Rahmens gegenüber herkömmlichen Rahmen. Ein weiterer Vorteil liegt darin, dass keine Nieten sich im Betrieb lösen können. Dies ist ein Problem, dem Betreiber von industriellen Backöfen entgegentreten, indem sie Metalldetektoren vorsehen, die Backwaren detektieren können, in welchen sich Metallteile befinden.

Ein weiterer Aspekt der vorliegenden Erfindung liegt daher darin, ein Backblech für industriell betriebene Backanlagen mit einem Rahmen und einem Inlay vorzusehen, wobei der Rahmen aus einem im Querschnitt rechteckigen Hohlprofil ausgebildet ist, das zwei Breitseitenwandungen und zwei Schmalseitenwandungen aufweist. Das Backblech zeichnet sich hierbei dadurch aus, dass das Inlay mit dem Rahmen mit lösbaren Verbindungsmitteln verbunden ist.

Der Begriff "lösbare Verbindungsmittel" bezeichnet zerstörungsfreie lösbare Verbindungsmittel, die nach dem Lösen des Inlays im Wesentlichen unverändert vorliegen und erneut zur Befestigung eines Inlays an einem Rahmen verwendet werden können. Nieten und stoffschlüssige Verbindungen, wie Schweiß- oder Lötverbindungen, sind in diesem Sinne keine lösbaren Verbindungsmittel.

Die lösbaren Verbindungsmittel können beliebige oben bereits erläuterte Verbindungsmittel, welche beispielsweise die schwimmende Lagerung bereitstellen, sein. Es können jedoch auch beliebige andere lösbare Verbindungsmittel, wie zum Beispiel Schraubverbindungen oder sonstige Rast- oder Schnappverbindungsmittel, sein. Die lösbaren Verbindungsmittel können beispielsweise zum Verbinden des oben erläuterten Steckrahmens mit dem Hauptrahmen oder zum unmittelbaren Verbinden des Inlays am Rahmen bzw. Hauptrahmen ausgebildet sein.

Der Rahmen weist vorzugsweise die oben erläuterte schlanke Form auf, bei der die Breitseitenwandungen um ein Vielfaches, insbesondere 3-faches größer als die Schmalseitenwandungen sind und die Breitseitenwandungen etwa senkrecht zur Ebene des Inlays ausgerichtet sind.

Die lösbaren Verbindungsmittel erlauben somit nicht nur ein einfaches und schnelles Austauschen der Inlays am Rahmen, sondern auch eine schmale, leichte und bezüglich der Hauptbelastung des Inlays steife Ausgestaltung des Rahmens. Eine solche lösbare Verbindung trägt somit mittelbar zur Gewichtseinsparung des gesamten Backblechs bei.

Das Inlay kann integraler Bestandteil des Steckrahmens sein und zusammen mit dem Steckrahmen am Hauptrahmen befestigt werden.

Das Inlay kann auch unabhängig vom Steckrahmen ausgebildet sein. Eine solche Ausgestaltung macht vor allem dann Sinn, wenn der Steckrahmen bezüglich des Hauptrahmens einen Innenrahmen bildet und der Hauptrahmen einen korrespondierenden Außenrahmen bildet und der Steckrahmen bzw. Innenrahmen das oben erläuterte Gefache trägt. Damit ist das Gefache unabhängig vom Hauptrahmen bzw. Außenrahmen ausgebildet. Das Inlay kann an der oberen Oberfläche des Hauptrahmens bzw. Außenrahmens befestigt sein, beispielsweise mit der oben erläuterten schwimmenden Befestigungsanordnung. Das Inlay kann auch mit Leisten, welche sich am Randbereich etwa senkrecht von der Ebene des Inlays erstrecken, versehen sein, um mit diesen Leisten im Bereich zwischen dem

Innenrahmen und dem Außenrahmen angeordnet und daran fixiert zu werden.

Der Innenrahmen kann aus einem im Querschnitt rechteckförmigen Hohlprofil, einem umlaufenden Blechstreifen oder einem umlaufenden Profil ausgebildet sein. Das Profil kann ein im Querschnitt U-förmiges Profil, das insbesondere mit seiner Öffnung nach innen weisend angeordnet ist, oder beispielsweise ein Strangprofil sein, das an seinem oberen und unteren Rand beispielsweise ein Hohlprofil oder ein umgebördeltes Profil aufweist.

Die oben erläuterten Backbleche sind im Wesentlichen aus Metall ausgebildet, wobei der Rahmen vor allem aus Stahl und insbesondere Nickel-Chrom-Stahl und das Inlay aus Aluminium bzw. einer Aluminiumlegierung (hiervon ausgenommen: Gitternetz) ausgebildet sind. Im Rahmen der Erfindung können auch Teile oder das gesamte Backblech aus hochtemperaturstabilen Kunststoff ausgebildet sein. Hochtemperaturstabile Kunststoffe sind z.B. Peek oder glasfaserverstärktes Peek. Weitere geeignete hochtemperaturstabile Kunststoffe sind Perfluoralkoxycopolymere (PFA), Polyimid, Polyamidimid (PAI), Polysulfon (PSU), Polyethersulfon (PES), Polyphenylsulfone (PPSU), Polyvinylidenfluorid (PVDF), Polyetherketone (PEK) oder Polytetrafluorethylen (PTFE). Aufgrund der geringeren Festigkeit von Kunststoff gegenüber Stahl ist es zweckmäßig den Rahmen aus Streben mit dicken Wandungen oder aus einem Vollkörper auszubilden. Der Rahmen ist vorzugsweise, wie es oben erläutert ist, schlank auszubilden.

Die Längs- und Querstreben des Gefaches können auch aus hochtemperaturstabilen Kunststoff ausgebildet sein, insbesondere kann das Gefache auch einteilig bzw. einstückig ausgebildet sein. Ein solches einstückiges Gefache kann bspw. Mittels Spritzguss hergestellt werden. Es kann auch zweckmäßig sein, mehrere Segmente eines solchen Gefaches vorzusehen. Diese können voneinander unabhängig hergestellt werden.

Ein solches Gefache aus Kunststoff kann mittels Schraubverbindungen, Rastverbindungen, Steckverbindungen mit dem Rahmen verbunden werden. Die Verbindungen können mit einem Spiel gegenüber dem Rahmen ausgebildet sein. Dies ist insbesondere Zweckmäßig, wenn das Gefache aus einem anderem Material als der Rahmen ausgebildet ist, so dass unterschiedliche thermische Ausdehnungskoeffizienten vorliegen (z.B. Gefache aus Kunststoff und Rahmen aus Stahl ausgebildet oder Gefache aus Aluminium oder einer Aluminiumlegierung und Rahmen aus Kunststoff ausgebildet).

Die oben erläuterten Backbleche für industrielle Backstraßen weisen eine Breite von zumindest 0,6 m und/oder eine Länge von zumindest 0,8 und insbesondere von zumindest 1,5 m auf. Die oben erläuterten Erfindungen oder einzelne Aspekt, insbesondere die Ausgestaltung der Inlays, können auch bei sogenannten Back-Off-Backbleche verwendet werden. Back-Off-Backbleche werden vor allem in Backautomaten in Verkaufsstellen zum Aufbacken von vorgebackenen Backlinge verwendet. Da die Ware bereits vorgebacken ist, sind die Anforderungen an die Oberfläche der Back-Off-Backbleche geringer als für Backbleche von industriellen Backstraßen. Daher sind Back-Off-Backbleche in der Regel nicht mit austauschbaren Inlays ausgebildet. Bei Back-Off-Backblechen können aber genauso wie es oben erläutert ist, Inlays vorgesehen sein, die aus einem Streckmetall oder Gitternetz ausgebildet sind. Das Inlay kann von einem Gefache unterstützt sein. Da das Back-Off-Backblech kleiner als Backblech für eine industrielle Backstraße ist, können die Back-Off-Backbleche auch ohne Gefache ausgebildet sein.

Die Back-Off-Backbleche können, wie es oben anhand der Backbleche für industrielle Backstraßen erläutert ist, auch aus Kunststoff vollständig oder in Teilen davon ausgebildet sein.

Ein Back-Off-Backblech weist eine Größe von ungefähr 0,4 m x 0,6 m auf. Die Back-Off-Backbleche können in unterschiedlichen Größen ausgebildet sein und eine Breite von zumindest 0,3 m und/oder eine Länge von zumindest 0,5 aufweisen. Sie weisen in der Regel eine Breite von nicht mehr als 0,6 m und/oder eine Länge von nicht mehr als 1 m auf.

Die Erfindung wird nachfolgend beispielhaft näher anhand von in den Zeichnungen gezeigten Ausführungsbeispielen erläutert. Die Zeichnungen zeigen in:
- Figur 1a: ein erstes Ausführungsbeispiel eines erfindungsgemäßen Backblechs in der Draufsicht, wobei das Backblech ein Lochblech aufweist, das in dieser Darstellung nicht enthalten ist, damit man die weiteren Elemente des Backblechs sehen kann,
- Figur 1b: das Backblech aus Figur A1a in einer Schnittansicht entlang der Schnittlinie B-B in Figur 1a,
- Figur 1c: eine vergrößerte Darstellung des linken Randbereichs des Backblechs aus Figur 1b,
- Figur 1d: eine vergrößerte Darstellung der Ansicht aus Figur 1b im Bereich einer Querstrebe,
- Figur 1e: das Backblech aus Figur 1a in einer Schnittansicht entlang der Linie A-A,
- Figur 1f: eine vergrößerte Detailansicht des linken Randes des Backblechs in der Ansicht aus Figur 1e,
- Figur 1g: eine vergrößerte Ansicht des Backblechs aus Figur 1e im Bereich einer Längsstrebe,
- Figur 2a: das Backblech aus Figur 1a in einer perspektivischen Ansicht von schräg oben,
- Figur 2b: eine vergrößerte Darstellung eines Eckbereichs des Backblechs nach Figur 2a,
- Figur 2c: eine vergrößerte Darstellung des Verbindungsbereichs zwischen einer Längsstrebe und einer Querstrebe,
- Figur 2d: eine vergrößerte Darstellung eines Kreuzungspunktes zwischen einer Längsstrebe und einer Querstrebe des Backblechs nach Figur 2a,
- Figur 2e: ein Ausschnitt des Inlays, das als Lochblech ausgebildet ist,
- Figur 3a: ein zweites Ausführungsbeispiel eines erfindungsgemäßen Backblechs in der Draufsicht, wobei das Backblech ein Lochblech aufweist, das in dieser Darstellung nicht enthalten ist, damit man die weiteren Elemente des Backblechs sehen kann,
- Figur 3b: das Backblech aus Figur 3a in einer Schnittansicht entlang der Linie A-A in Figur 3a,
- Figur 4a: einen Außenrahmen des Backblechs nach Figur 3a in der Draufsicht,
- Figur 4b: ein Längsrahmenprofil des Außenrahmens nach Figur 4a mit Blickrichtung von innen auf das Längsrahmenprofil,
- Figur 4c: ein Querrahmenprofil des Außenrahmens nach Figur 4a in Seitenansicht mit Blickrichtung von innen auf das Querrahmenprofil,
- Figur 4d: das Längsrahmenprofil bzw. das Querrahmenprofil gemäß Figur 4b oder Figur 4c im Querschnitt,
- Figur 4e-4g: eine Stapelecke des Außenrahmens nach Figur 4a in einer Seitenansicht, Draufsicht und Schnittansicht,
- Figur 5a: das Lochblech des Backblechs nach Figur 3a in der Draufsicht,
- Figur 5b: das Lochblech aus Figur 5a in einer Seitenansicht mit Blickrichtung auf eine Querseite des Lochblechs,
- Figur 5c: eine Darstellung eines Eckbereiches des Lochblechs aus Figur 5b in vergrößerter Darstellung,
- Figur 5d: eine Längsleiste des Inlays des Backblechs aus Figur 3a in der Seitenansicht,
- Figur 5e: die Längsleiste aus Figur 5d in einer Stirnansicht,
- Figur 6a: einen Innenrahmen mit Gefache des Backblechs nach Figur 3a in der Draufsicht,
- Figur 6b: den Innenrahmen in der Seitenansicht mit Blickrichtung auf die Längsseite, wobei im mittigen Bereich, der Innenrahmen teilweise weggeschnitten ist,
- Figur 6c: eine Verbindungsstelle des Innenrahmens mit einem Stützprofil des Gefaches in der Draufsicht,
- Figur 6d-6e: das Stützprofil aus der Figur 6c in einer Seitenansicht und in einer Querschnittsansicht,
- Figur 6f: ein Stützblech des Gefaches in einer Seitenansicht.
- Figur 7a: ein drittes Ausführungsbeispiel eines erfindungsgemäßen Backblechs in der Draufsicht, wobei das Backblech ein Lochblech aufweist, das in dieser Darstellung nicht enthalten ist, damit man die weiteren Elemente des Backblechs sehen kann,
- Figur 7b: das Backblech aus Figur 7a in einer Schnittansicht entlang der Linie C-C in Figur C1a,
- Figur 8a: einen Außenrahmen des Backblechs nach Figur 7a in der Draufsicht,
- Figur 8b: ein Längsrahmenprofil des Außenrahmens nach Figur 8a mit Blickrichtung von innen auf das Längsrahmenprofil,
- Figur 8c: eine Schnittansicht des Außenrahmens nach Figur 8a entlang der Schnittlinie B-B in Figur C2b,
- Figur 8d: eine vergrößerte Darstellung des rechten Randes der Ansicht aus Figur 8c,
- Figur 8e: eine Schnittansicht eines fehlenden Druckstückes, das bei dem Außenrahmen nach Figur 8a verwendet wird,
- Figur 8f: ein Stützblech des Außenrahmens nach Figur 8a in der Seitenansicht,
- Figur 8g: das Stützblech gemäß Figur 8f in einer Stirnansicht,
- Figur 8h: ein Verstärkungsblech des Außenrahmens nach Figur 8a in einer Seitenansicht,
- Figur 8i: das Verstärkungsblech nach Figur 8h, in einer Stirnansicht,
- Figur 9a: ein Inlay des Backblechs nach Figur 7a in der Draufsicht,
- Figur 9b: das Inlay gemäß Figur 9a in der Seitenansicht,
- Figur 9c: eine vergrößerte Darstellung des rechten Randes der Ansicht aus Figur 9b,
- Figur 10a: ein Gefache mit Quer- und Längsstreben in einer perspektivischen Ansicht,
- Figur 10b: ein Kreuzungspunkt des Gefaches nach Figur 10a in vergrößerter Darstellung,
- Figur 11a: ein viertes Ausführungsbeispiel eines erfindungsgemäßen Backblechs in der Draufsicht, wobei das Backblech ein Lochblech aufweist, das in dieser Darstellung nicht enthalten ist, damit man die weiteren Elemente des Backblechs sehen kann,
- Figur 11b: das Backblech aus Figur 11a in einer Schnittansicht entlang der Schnittlinie A-A in Figur 11a,
- Figur 11c: eine vergrößerte Darstellung des rechten Randes der Ansicht aus Figur 11b,
- Figur 11e: eine vergrößerte Ansicht eines Eckbereichs aus Figur 11a,
- Figur 12a: eine Längsleiste des Inlays des Backblechs aus Figur 11a in der Seitenansicht,
- Figur 12b: die Längsleiste aus Figur 12a in der Stirnansicht,
- Figur 13a: einen Außenrahmen des Backblechs nach Figur 11a in der Draufsicht,
- Figur 13b: den Außenrahmen nach Figur 13a in einer Schnittansicht entlang der Schnittlinie A-A in Figur 13a,
- Figur 14a: ein aus einem Drahtgeflecht ausgebildetes Gefache in der Draufsicht des Backblechs nach Figur 11a,
- Figur 14b: das Gefache aus Figur 14a in einer Seitenansicht,
- Figur 14c: eine vergrößerte Darstellung eines Bereichs der Seitenansicht des Gefaches mit einer Öse eines Querdrahtes,
- Figur 14d: eine vergrößerte Darstellung des Gefaches in der Seitenansicht aus Figur 14b am rechten Randbereich, das einen abgewinkelten Längsdraht zeigt,
- Figur 15a: einen Querdraht in der Seitenansicht,
- Figur 15b: den Querdraht nach Figur D5a in der Stirnansicht,
- Figur 16: einen Längsdraht des Gefaches in einer Seitenansicht,
- Figur 17a: ein Stützblech in einer Ansicht von unten,
- Figur 17b: das Stützblech aus Figur D7a in einer Stirnansicht,
- Figur 18: einen Ausschnitt eines Lochbleches in der Draufsicht,
- Figur 19: einen Ausschnitt eines Streckmetalls in der Draufsicht,
- Figur 20: einen Ausschnitt eines Gitternetzes in der Draufsicht.
- Figur 21a: einen umlaufenden Innenrahmen mit einem Gitternetz vor dem Klemmen des Gitternetzes in den Innenrahmen im Querschnitt,
- Figur 21b: den umlaufenden Innenrahmen aus Figur 21a nach dem Klemmen des Gitternetzes in den Innenrahmen im Querschnitt,
- Figur 21c: den umlaufenden Innenrahmen aus Figur 21a mit dem Gitternetz in der Draufsicht,
- Figur 22: einen weiteren Innenrahmen im Querschnitt,
- Figur 23a: ein fünftes Ausführungsbeispiel eines erfindungsgemäßen Backblechs in einer perspektivischen Ansicht, das an seinen Eckbereichen Stabilisierungsecken aufweist,
- Figur 23b: eine vergrößerte Darstellung eines Eckbereichs des Backblechs nach Figur 23a,
- Figur 23c: eine vergrößerte Darstellung des Verbindungsbereichs zwischen einem Längsdraht und einem Querseitenprofil nach Figur 23a,
- Figur 23d: eine vergrößerte Darstellung des Eckbereichs des Backblechs aus Figur 23a im Querschnitt,
- Figur 23e: eine vergrößerte Darstellung des Verbindungsbereichs zwischen einem Längsdraht und einer Querstrebe,
- Fig. 24a,24b: ein sechstes Ausführungsbeispiel im Bereich eines Längsprofils bzw. im Bereich einer Querleiste in einer Querschnittsansicht, und
- Fig. 24c: eine siebtes Ausführungsbeispiel im Bereich eines Längsprofils in einer Querschnittsansicht.

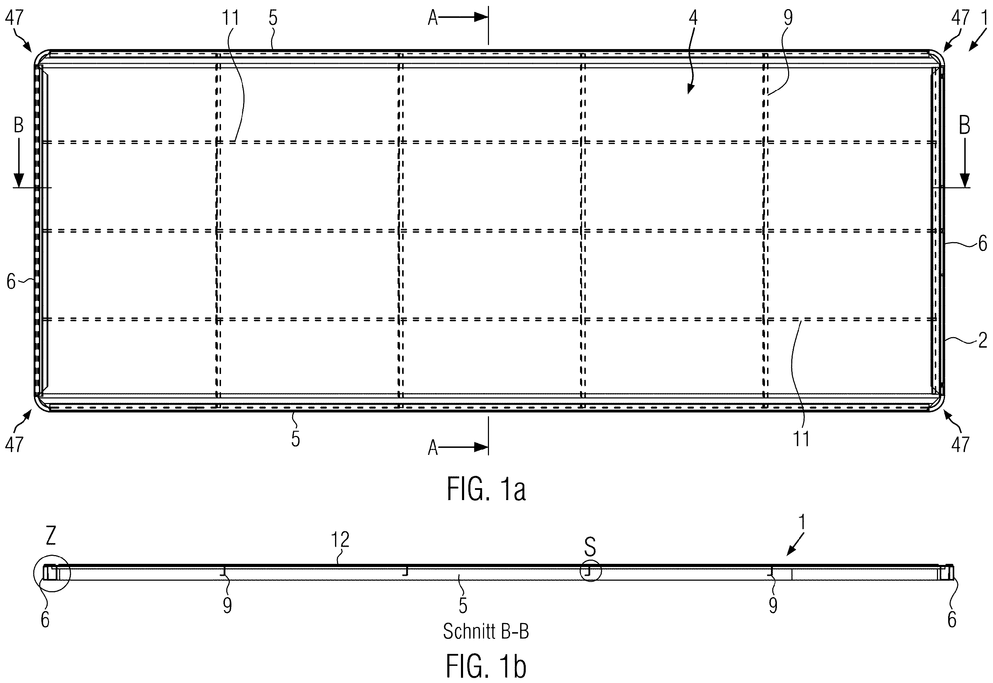

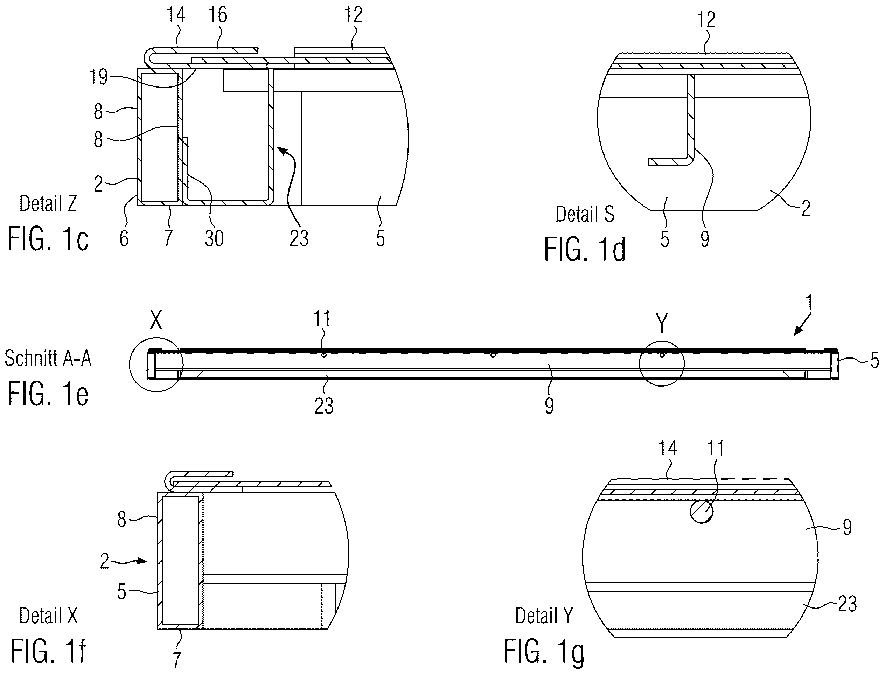

Ein erstes Ausführungsbeispiel eines Backblechs 1 für industriell betriebene Backanlagen wird im Folgenden anhand der Figuren 1a bis 2e erläutert.

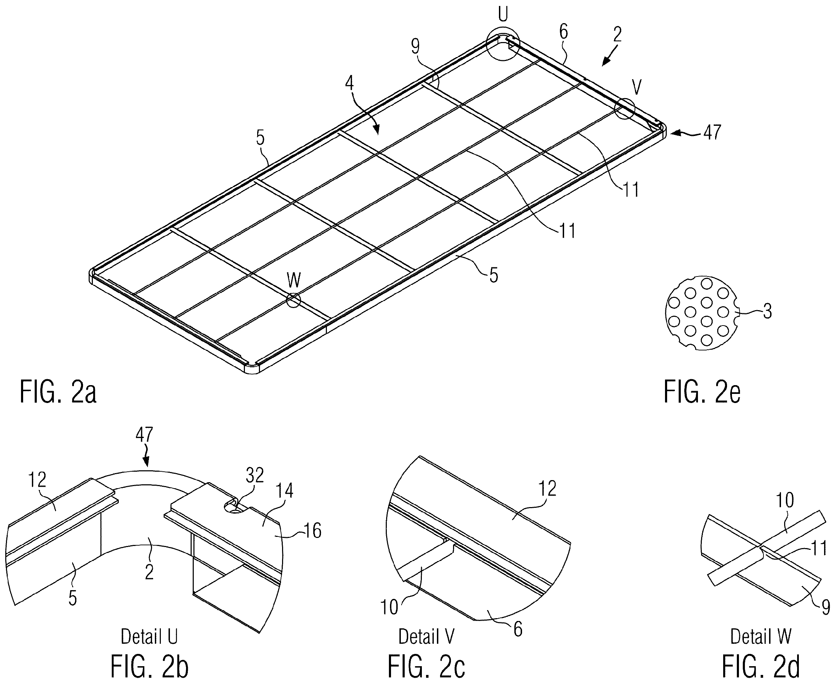

Das Backblech 1 ist aus einem Rahmen 2 und einem Inlay 3 (Figur 2e) ausgebildet, wobei im Rahmen 2 ein Gefache 4 angeordnet ist, das zur Stützung des Inlays 3 dient. Der Rahmen 2 (Figur 1a bzw. Figur 2a) ist in der Draufsicht rechteckförmig aus zwei Längsseitenprofilen 5 und zwei Querseitenprofilen 6 ausgebildet. Die Längsseitenprofile 5 und Querseitenprofile 6 weisen jeweils im Querschnitt ein rechteckförmiges Hohlprofil mit zwei einander gegenüber liegenden Schmalseitenwandungen 7 auf (Figur 1c, Figur 1f). Im vorliegenden Ausführungsbeispiel weist die Breitseitenwandung 8 eine Breite bzw. Höhe von 30 mm und die Schmalseitenwandung 7 von 10 mm auf. Die Profile der Längsseitenprofile 5 und der Querseitenprofile 6 können auch anders dimensioniert sein. Vorzugsweise beträgt die Breite der Breitseitenwandungen 8 das n-fache der Schmalseitenwandung 7, wobei n zumindest 1,5 bzw. zumindest 2 und vorzugsweise zumindest 2,5 beträgt.

Der Rahmen 2 ist aus einem einteiligen umlaufenden Metallrohr ausgebildet. Das Metallrohr ist an den Eckbereichen 47 gebogen (Figur 2b). Das umlaufende Metallrohr ist im Bereich der Längsseitenprofile 5 des Rahmens 2 stoffschlüssig, beispielsweise mittels Schweißen oder Löten, verbunden. Der Rahmen 2 bildet somit einen monolithischen Körper. Obwohl das Profil selbst sehr schlank ausgebildet ist, besitzt ein solcher Rahmen 2 eine hohe Steifigkeit.

Der Rahmens 2 ist aus einem rostfreien Stahl, insbesondere einem Chrom-Nickel-Stahl ausgebildet.

Im Rahmen 2 ist das Gefache 4 durch mehrere Querstreben 9 und Längsstreben 10 ausgebildet. Im vorliegenden Ausführungsbeispiel sind die Querstreben 9 als L-förmiges Stützprofil 9 ausgebildet (Figur 1d), welche im oberen Randbereich in regelmäßigen Abständen nach oben offene Ausnehmungen bzw. Scharten 11 aufweisen. In diesen Scharten 11 befinden sich die Längsstreben 10, welche aus Drahtelementen mit kreisförmigem Querschnitt ausgebildet sind (Figur 1g). Sowohl die Querstreben 9 als auch die Längsstreben 10 sind an den Innenseiten der Längsseitenprofile 5 bzw. Querseitenprofile 6 des Rahmens 2 mittels einer stoffschlüssigen Verbindung (Löten oder Schweißen) befestigt. Hierdurch trägt das Gefache 4, das fest mit dem Rahmen 2 verbunden ist, erheblich zur Festigkeit und Steifigkeit des Backblechs 1 bei.

Die Querstreben 9 und die Längsstreben 10 sind mit ihrem oberen Rand zueinander bündig angeordnet, sodass sie gleichermaßen das Inlay 3 von unten unterstützen können.

An den Längsseitenprofilen 5 des Rahmens 2 sind jeweils U-förmige Längsschienen 12 (Figur 1c) an der Oberseite der Längsseitenprofile 5 derart befestigt, dass die Öffnungen der U-förmigen Längsschienen 12 in Richtung zum Inneren des Rahmens 2 weisen. Diese Längsschienen 12 sind stoffschlüssig mittels Löten oder Schweißen an den Längsseitenprofilen 5 befestigt. Die U-förmigen Längsschienen 12 sind so ausgebildet, dass darin das Inlay 3 mit etwas Spiel schwimmend gelagert werden kann und in Längsrichtung der Längsschienen 12 verschoben werden kann.

An den Querseitenprofilen 6 ist jeweils eine U-förmige Querschiene 14 (Fig. A1c) befestigt, wobei die U-förmigen Querschienen 14 mit ihren Öffnungen in Richtung zur Mitte des Rahmens 2 weisend angeordnet sind. Die U-förmigen Querschienen 14 dienen zur Aufnahme der quer verlaufenden Ränder des Inlays 3. Die U-förmigen Querschienen 14 weisen jeweils eine obere Lasche 16 und eine untere Lasche 19 auf, wobei am freien Rand der unteren Lasche 19 eine Profilschiene 23 angeformt ist, die sich von der unteren Lasche 19 nach unten bis zum Niveau der unteren Schmalseitenwandung 7 des Rahmens 2 erstreckt, von dort nach außen in Richtung zum benachbarten Querseitenprofil 6 abgewinkelt ist und sich bis zum Querseitenprofil 6 erstreckt. Von dort ist das Profil nochmals nach oben abgewinkelt, sodass eine Stützlasche 30 ausgebildet ist, welche sich an der nach innen weisenden Breitseitenwandung 8 des Querseitenprofils 6 abstützt (Figur 1c).

Die Querschiene 14 weist im Bereich des äußeren Randes der oberen Lasche 16 einige Ausnehmungen (Figur 2b) auf, wobei im Bereich der Ausnehmung in der unteren Lasche 19 eine Durchgangsöffnung ausgebildet ist, durch welche sich ein Schraubbolzen 32 erstreckt, mit dem die Querschiene 14 in korrespondierende Gewindebohrungen der oberen Schmalseitenwandung 7 des Querseitenprofils 6 eingeschraubt und damit am Rahmen 2 befestigt ist. Die entsprechenden Schraubverbindungen sind lösbar, sodass die Querschienen 14 lösbar am Rahmen 2 befestigt sind. Durch Lösen der Schraubverbindungen kann ein von den Längsschienen 12 und Querschienen 14 eingefasstes Inlay 3 derart gelöst werden, dass es in den Längsschienen 12 frei verschieblich ist und vom Rahmen 2 getrennt und durch ein weiteres Inlay 3 ausgetauscht werden kann.

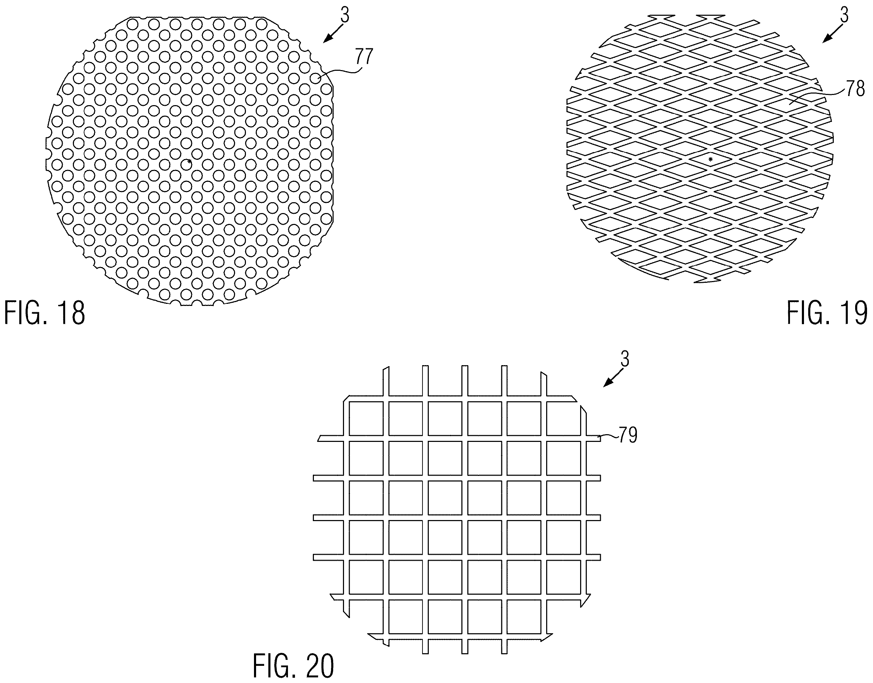

Im vorliegenden Ausführungsbeispiel ist das Inlay 3 als Lochblech (Figur 2e, Figur 18) ausgebildet, wobei die Löcher in einem regelmäßigen Raster angeordnet sind. Im vorliegenden Ausführungsbeispiel sind jeweils drei benachbarte Löcher an den Eckpunkten jeweils eines gleichseitigen Dreiecks angeordnet, wobei die Mittelpunkte der Löcher die Eckpunkte des gleichseitigen Dreiecks bilden. Die Ecken dieses gleichseitigen Dreiecks sind jeweils 3,5 mm beabstandet. Die Löcher weisen einen Durchmesser von 2 mm auf.

Dieses regelmäßige Raster kann auch so beschrieben werden, dass die Löcher gleichmäßig in Reihen angeordnet sind, wobei benachbarte Reihen jeweils um einen halben Lochabstand zueinander versetzt angeordnet sind.

Selbstverständlich können auch anders dimensionierte Lochbleche und insbesondere Lochbleche mit einem anderen Lochraster verwendet werden. Es können auch Inlays 3 verwendet werden, welche aus einem Streckmetall 78 oder aus einem steifen oder flexiblen Gitternetz 79 ausgebildet sind, wie sie unten anhand des zweiten Ausführungsbeispiels näher erläutert werden.

Die Querschiene 14 mit der Profilschiene 23, an welcher die Stützlasche 30 ausgebildet ist, kann einfach am Querseitenprofil 6 durch Anlegen der Stützlasche 30 an dem Querseitenprofil 6 korrekt positioniert und dann verschraubt werden. Die Profile 23 mit ihrer Stützlasche 30 tragen außerdem dazu bei, dass die U-förmige Schiene der Querschiene 14 bei Gebrauch nicht verkippt und zuverlässig immer gleich ausgerichtet ist.

Das Inlay 3 ist im vorliegenden Ausführungsbeispiel aus einem dünnen Blech mit einer Dicke von 1,15 mm ausgebildet. Durch das Vorsehen des Gefaches 4 ist es sogar möglich, noch dünnere Bleche zu verwenden. Je dünner das Blech ist, umso geringer ist die Wärmekapazität des Inlays 3.

Der Rahmen 2 und die Querstreben 9 und Längsstreben 10 des Gefaches 4 sind aus Edelstahl, insbesondere Chrom-Nickel-Stahl ausgebildet. Die U-förmigen Längsschienen 12 und die U-förmigen Querschienen 14 sind auch aus demselben Material wie der Rahmen 2 ausgebildet, da insbesondere die Längsschienen 12 stoffschlüssig mit den Längsstreben 10 bzw. Längsseitenprofilen 5 des Rahmens 2 verbunden sind und unterschiedliche Materialien zwischen den Längsschienen 12 bzw. Querschienen 14 auf der einen Seite und den Rahmenprofilen 5, 6 auf der anderen Seite zu Verspannungen am Rahmen 2 führen würden.

Das Inlay 3 ist aus Aluminium oder einer Aluminiumlegierung, ausgebildet.

Durch die schlanke Ausbildung des Rahmens 2 kann im Vergleich zu herkömmlichen Backblechen 1 für industrielle Anwendungen erheblich an Gewicht eingespart werden. Das Gefache 4 hat zweierlei Funktionen. Einerseits dient es zur Versteifung des Rahmens 2, da die Querstreben 9 und die Längsstreben 10 des Gefaches 4 fest (hier stoffschlüssig) mit dem Rahmen 2 verbunden sind. Zudem stützt das Gefache 4 das Inlay 3 in regelmäßigen Abständen an der Unterseite ab. Hierdurch ist es möglich, das Inlay 3 sehr dünn auszubilden, wodurch erheblich Gewicht eingespart werden kann. Das Gefache 4 dient somit einerseits zur Versteifung des Backblechs 1 als auch zur Gewichteinsparung, da durch die Unterstützung des Inlays 3 durch das Gefache 4 ein sehr dünnes und damit leichtes Inlay 3 verwendet werden kann. Gleichermaßen wird durch das Gefache 4 der Rahmen 2 versteift, wodurch ein im Vergleich zu herkömmlichen industriellen Backblechen 1 wesentlich schlankerer Rahmen 2 verwendet werden kann, was auch eine erhebliche Gewichteinsparung bedeutet.

Bei einer Größe des Backblechs 1 von ca. 2 m x 0,8 m kann im Vergleich zu herkömmlichen Backblechen 1 ein Gewicht von etwa 4-5 kg eingespart werden, d.h., dass das Gewicht bei diesem Ausführungsbeispiel von etwa 16 kg (siehe aktueller Industriestandard) auf 11 bis 12 kg reduziert werden kann. Versuche in Backstraßen mit diesem Backblech haben eine Energieeinsparung von etwa 10% bis 12% je nach Backprodukt ergeben.

Zudem wird durch das geringe Gewicht des Backblechs 1 die Wärmekapazität des Backblechs 1 erheblich verringert. Das Gewicht eines herkömmlichen Backblechs 1 ist etwa 40 % größer als die des Backblechs 1 nach dem ersten Ausführungsbeispiel. Hierdurch wird in den industriellen Backanlagen eine Energieeinsparung von zumindest etwa 15 % erzielt, da eine wesentlich geringere Wärmekapazität erwärmt werden muss und dementsprechend auch weniger Wärme aus der Backmaschine beim Herausnehmen eines Backblechs 1 entfernt wird.

Durch das geringe Gewicht ist das erfindungsgemäße Backblech 1 auch wesentlich einfacher für eine Person zu handhaben.

Die Inlays 3 können an sich beliebig oft ausgetauscht werden. Die Inlays 3 weisen in der Regel eine Anti-Haft-Beschichtung (insbesondere PTFE) auf, welche sich mit der Zeit abnutzt. Die Lebensdauer des Rahmens 2 mit dem darin integrierten Gefache 4 ist an sich nicht begrenzt. Durch die schwimmende Lagerung können beliebig viele Inlays 3 am Rahmen 2 ausgetauscht werden. Zudem bewirkt die schwimmende Lagerung, dass es keine Verspannung zwischen dem Inlay 3 und dem Rahmen 2 gibt, selbst wenn das Backblech 1 erheblichen Temperaturunterschieden unterliegt und das Inlay 3 und die übrigen Teile des Backblechs 1 aus unterschiedlichen Materialien gefertigt sind.

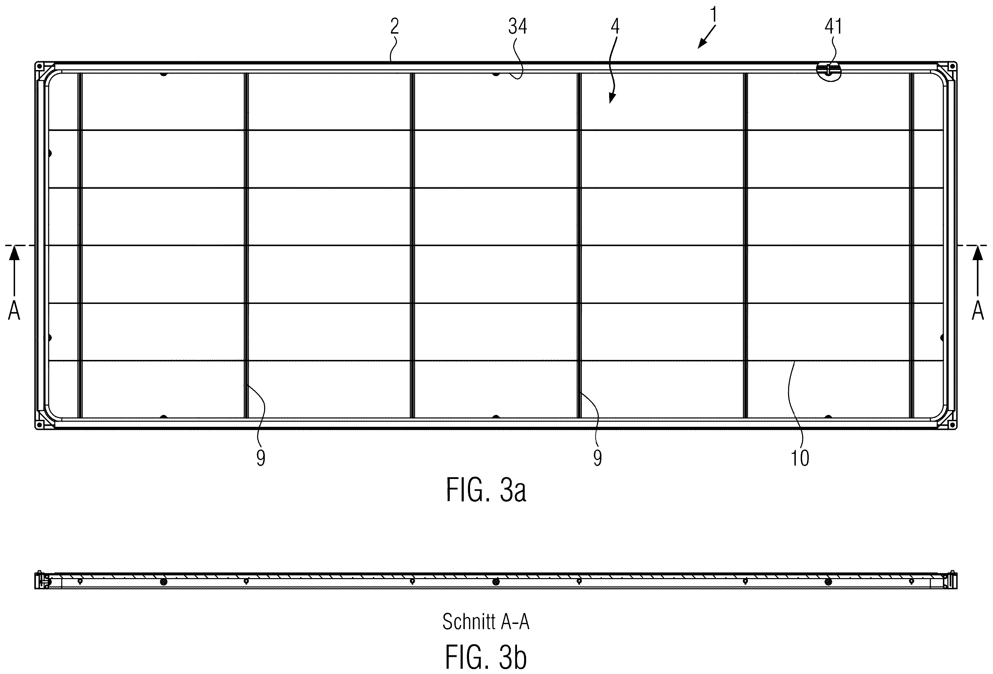

Ein zweites Ausführungsbeispiel eines Backblechs 1 für industriell betriebene Backanlagen wird im Folgenden anhand der Figuren 3a bis 6f erläutert.

Das Backblech 1 ist aus einem Außenrahmen 2, einem Inlay 3 und einem Innenrahmen 34, in den ein Gefache 4 integriert ist, ausgebildet (Figur 3a).

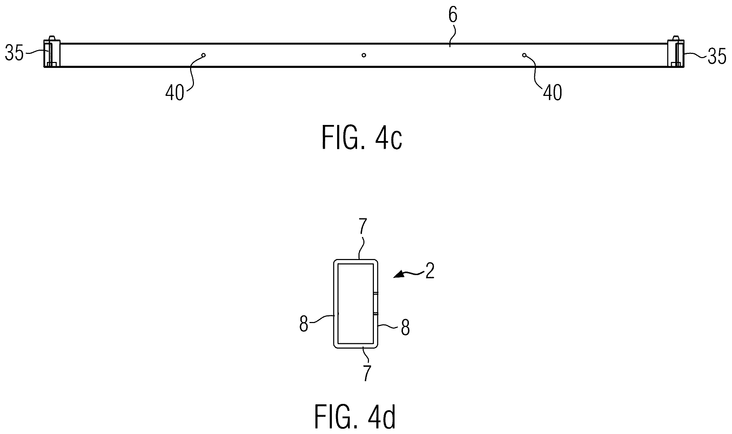

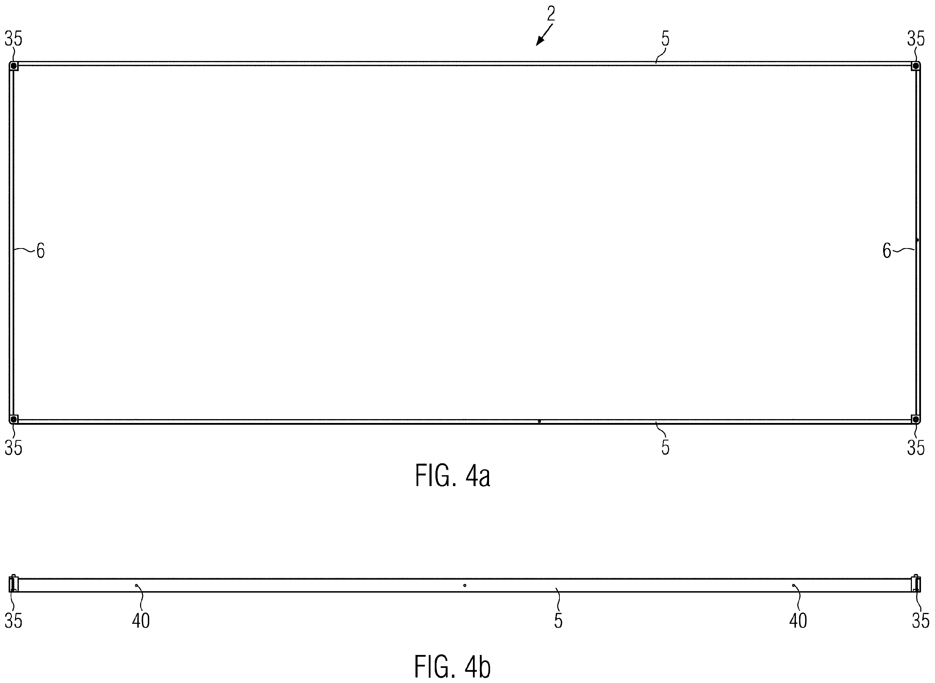

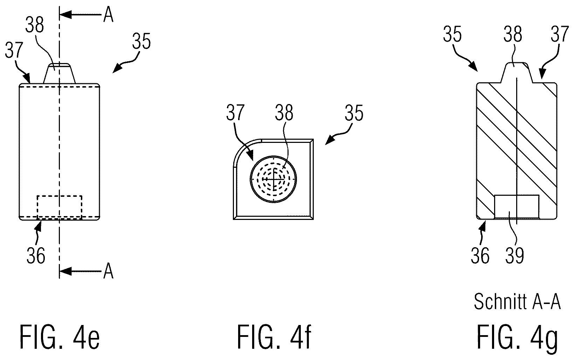

Der Außenrahmen (Figur 4a bis 4g) ist in der Draufsicht rechteckförmig aus zwei Längsseitenprofilen 5 und zwei Querseitenprofilen 6 ausgebildet, welche an den Ecken jeweils mittels einer Stapelecke 35 miteinander verbunden sind.

Die Längsseitenprofile 5 und Querseitenprofile 6 weisen jeweils im Querschnitt ein rechteckförmiges Hohlprofil mit zwei einander gegenüber liegenden Breitseitenwandungen 8 und zwei einander gegenüber liegenden Schmalseitenwandungen 7 auf (Figur 4d). Im vorliegenden Ausführungsbeispiel weist die Breitseitenwandung 8 eine Breite bzw. Höhe von 30 mm und die Schmalseitenwandung 7 von 10 mm auf. Die Profile der Längsseitenprofile 5 und der Querseitenprofile 6 können auch anders dimensioniert werden. Vorzugsweise beträgt die Breite der Breitseitenwandung 8 das n-fache der Schmalseitenwandung 7, wobei n zumindest 1,5 bzw. zumindest 2 und vorzugsweise zumindest 2,5 beträgt.

Die Stapelecke 35 ist ein massiver etwa quaderförmiger Körper (Figur 4e-4g), welcher eine Bodenseite 36 und eine Deckenseite 37 aufweist. An der Deckenseite 37 ist etwa mittig ein nach oben bevorstehender Zapfen 38 an der Stapelecke 35 ausgebildet. Der Zapfen 38 weist eine nach oben hin sich konisch verjüngende Form auf. An der Bodenseite 36 ist eine Ausnehmung 39 ausgebildet, welche zur Aufnahme eines Zapfens 38 einer weiteren Stapelecke 35 geeignet ist.

Die Längsseitenprofile 5 und Querseitenprofile 6 sind mittels einer stoffschlüssigen Verbindung, wie zum Beispiel einer Schweiß- oder Lötverbindung, mit den Stapelecken 35 verbunden, sodass sie gemeinsam den Außenrahmen 2 ausbilden. Der Außenrahmen 2 ist aus einem rostfreien Stahl, insbesondere einem Chrom-Nickel-Stahl ausgebildet. Ein solcher Stahl besitzt eine hohe mechanische Festigkeit bzw. Steifigkeit und zudem eine hohe Abriebfestigkeit, welche bei der Anwendung in industriellen Backöfen wichtig ist, um einen Abrieb im Backofen möglichst zu vermeiden.

An den Innenwandungen der Längsseitenprofile 5 und Querseitenprofile 6 sind in regelmäßigen Abständen Gewindebohrungen 40 ausgebildet, in welche Schraubbolzen 41 zum Verbinden des Innenrahmens 34 und des Inlays 3 mit dem Außenrahmen 2 aufgenommen werden können.

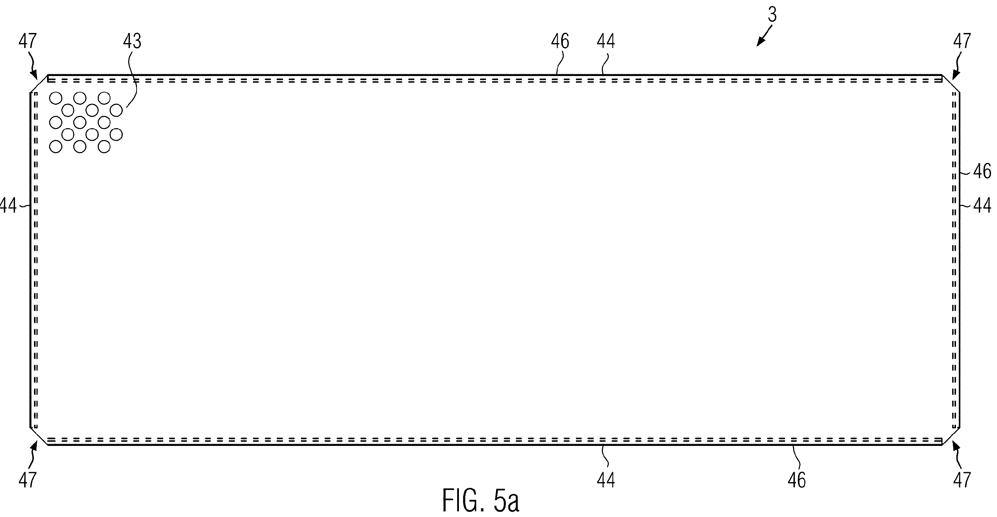

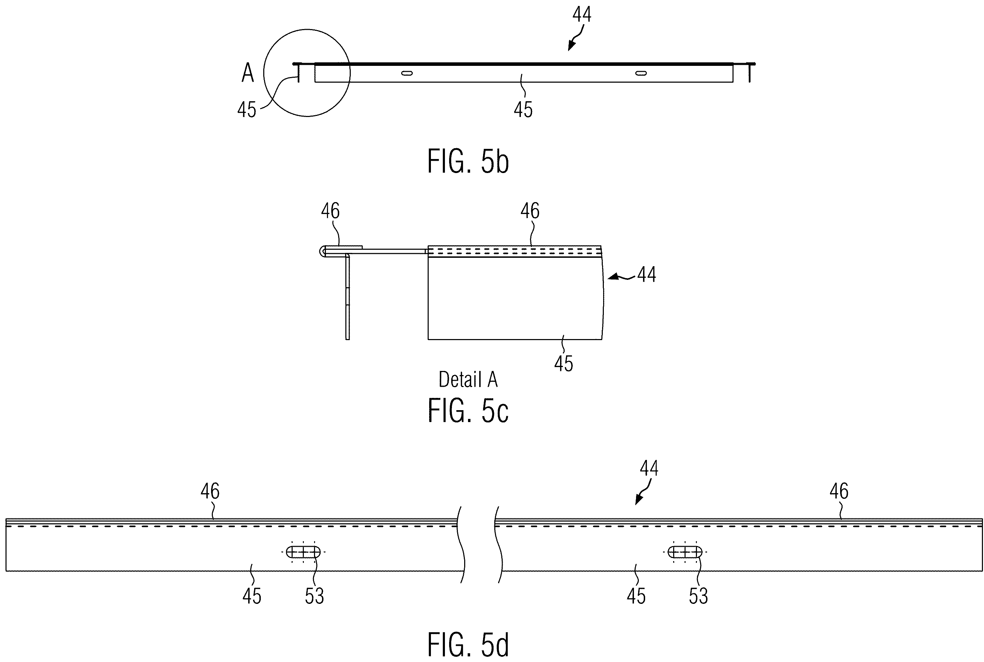

Das Inlay 3 des vorliegenden Ausführungsbeispiels ist aus einem Lochblech 43 (Figur 5a) und am Rand des Lochblechs 43 angeklemmten Leisten 44 ausgebildet. Die Leisten 44 sind jeweils aus einem streifenförmigen Blech geformt, das einen zum Lochblech 43 etwas senkrechten Leistenabschnitt 45 und einen daran angeformten Bördelabschnitt 46 aufweist. Der Bördelabschnitt 46 ist um den jeweiligen Randbereich des Lochblechs 43 gebördelt, sodass die Leisten 44 fest mit dem Lochblech 43 verbunden sind.

Das in der Draufsicht etwa rechteckförmige Lochblech 43 weist somit vier Leisten 44 auf, die sich etwa über die gesamten Längs- bzw. Querränder des Lochblechs 43 erstrecken, wobei lediglich die Eckbereiche 47 des Inlays 3 frei von den Leisten 44 sind (Figur 5a-5c).

In dem Leistenabschnitt 45 sind Langlöcher 53 ausgebildet, die sich in Längsrichtung der Leisten 44 erstrecken und derart angeordnet sind, dass sie im zusammengesetzten Backblech 1 mit den Gewindebohrungen 40 fluchten, sodass sich die Schraubbolzen 41 hindurch erstrecken können. Durch das Vorsehen der Langlöcher 53 ist ein gewisses Spiel zwischen dem Inlay 3 und dem Außenrahmen 2 gegeben.

Sowohl das Lochblech 43 als auch die Leisten 44 sind aus Aluminium oder einer Aluminiumlegierung ausgebildet.

Das Lochblech 43 weist im vorliegenden Ausführungsbeispiel eine Dicke von 1,15 mm auf.

Der Innenrahmen 34 ist im vorliegenden Ausführungsbeispiel aus einem streifenförmigen Aluminiumblech ausgebildet, das jeweils am oberen unteren Rand nach außen umgebördelt ist und so eine untere und obere Bördelkante 48a und 48b ausbildet. Die Bördelkanten 48a, 48b dienen der Versteifung des Innenrahmens 34 und durch das Vorsehen von den Bördelkanten 48a, 48b werden scharfkantige Kanten am Innenrahmen 34 vermieden. Der Innenrahmen 34 ist einteilig aus dem Aluminiumstreifen gefertigt, wobei er in den Eckbereichen 47 entsprechend gebogen ist und die Endabschnitte des Streifens mittels einer stoffschlüssigen Verbindung, insbesondere einer Schweiß- oder Lötverbindung miteinander verbunden sind.

An den Längsseiten des Innenrahmens 34 sind Langlöcher 49 ausgebildet, die sich in Längsrichtung der Längsseiten erstrecken und zum Befestigen des Innenrahmens 34 zusammen mit dem Inlay 3 am Außenrahmen 2 dienen.

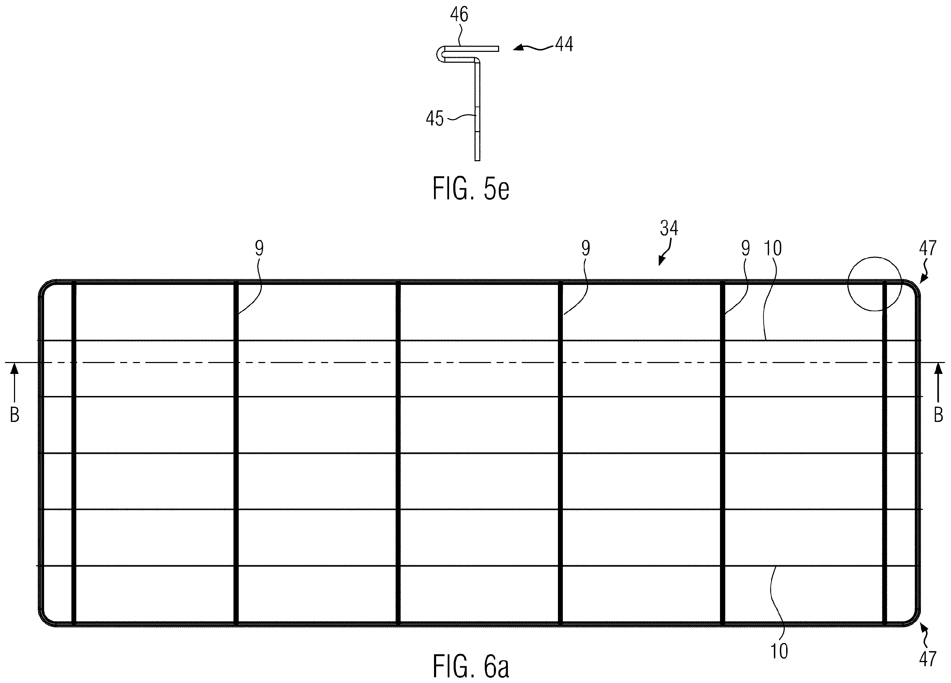

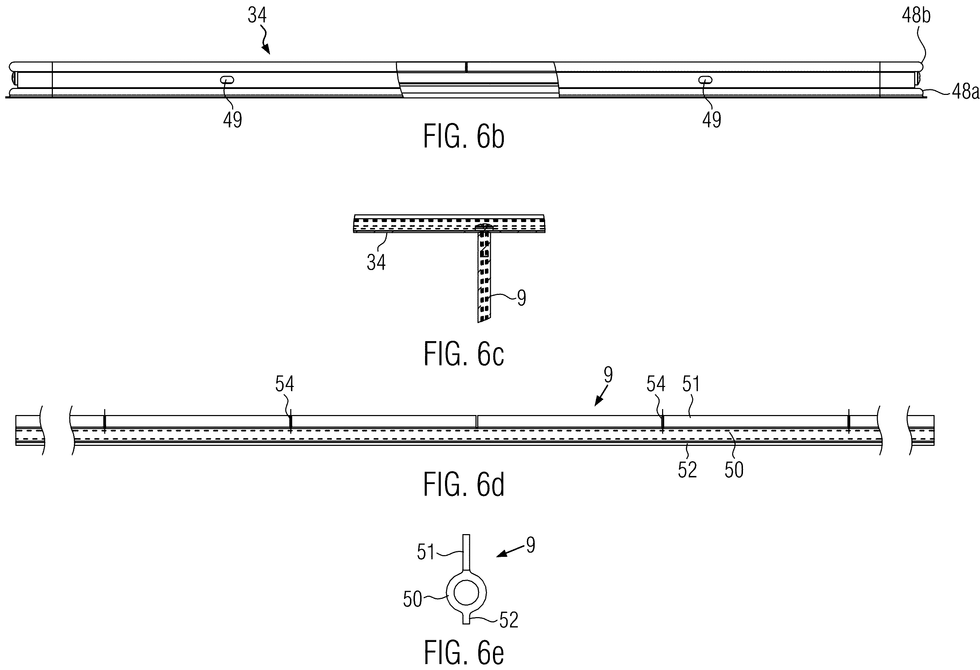

Am Innenrahmen 34 sind Stützprofile 9 befestigt (Figur 6a). Die Stützprofile 9 (Figur 6c und 6e) sind Strangprofile mit einem rohrförmigen Abschnitt 50 und zwei diametral zueinander an rohrförmigen Abschnitten 50 gegenüberliegenden Stegen 51, 52. Der obere Steg 51 ist breiter als der untere Steg 52. Mit einem Schaubolzen 41 kann das Stützprofil 9 derart am Innenrahmen 34 befestigt werden, dass sich der Schraubbolzen 41 durch eines ein Loch (nicht dargestellt) im Innenrahmen 34 erstreckt und in den rohrförmigen Abschnitt 50 des Stützprofils 9 eingeschraubt ist. Die Schraubverbindungen zwischen dem Innenrahmen 34 und den Stützprofilen 9 führen dazu, dass der Innenrahmen 34 und die Stützprofile 9 eine Art steife Fachwerkstruktur bildet. Im vorliegenden Ausführungsbeispiel sind im Innenrahmen 34 sechs Stützprofile 9 vorgesehen (siehe Figur 6a). Die Stützprofile 9 erstrecken sich parallel zu den Querseiten des Innenrahmens 34. Es ist selbstverständlich auch möglich, eine andere Anzahl von Stützprofilen 9 vorzusehen. Es ist zweckmäßig, dass zumindest drei, insbesondere zumindest vier bzw. zumindest fünf Stützprofile 9 vorgesehen sind. Je mehr Stützprofile 9 am Innenrahmen 34 befestigt sind, desto steifer ist er ausgebildet, aber desto schwerer wird aber auch das gesamte Backblech 1.

Die Stützprofile 9 weisen an ihren oberen Stegen 51 in regelmäßigen Abständen Einschnitte 54 auf, die sich jeweils vom oberen Rand des Stützprofils 9 bis zum rohrförmigen Abschnitt 50 des Stützprofils 9 erstrecken.

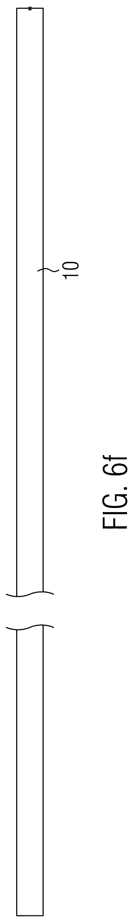

Im vorliegenden Ausführungsbeispiel besitzen die Einschnitte 54 eine Tiefe von 8 mm. In die Einschnitte 54 sind streifenförmige Stützbleche 10 eingesetzt, die sich parallel zu den Längsseiten 57 des Innenrahmens 34 über die gesamte Länge des Innenrahmens 34 erstrecken. Die Stützbleche 10 (Figur 6f) weisen im vorliegenden Ausführungsbeispiel eine Höhe von 8 mm auf, sodass sie mit ihrem oberen Rand bündig mit dem oberen Rand der oberen Stege 24 der Stützprofile 9 abschließen. Im vorliegenden Ausführungsbeispiel sind fünf Stützbleche 10 vorgesehen, die in gleichmäßigem Abstand entlang der Stützprofile 9 bzw. entlang der Querseiten des Innenrahmens 34 angeordnet sind. Im Rahmen 2 der Erfindung können auch eine unterschiedliche Anzahl von Stützblechen 10 vorgesehen sein. Es zweckmäßig, zumindest drei, insbesondere zumindest vier vorzugsweise zumindest fünf Stützbleche 10 vorzusehen.

Die Stützprofile 9 bilden zusammen mit den Stützblechen 10 das Gefache 4, das sich im Innenbereich des Innenrahmens 34 erstreckt. Die Stützprofile 9 stellen somit die Querstreben 9 und die Stützbleche 10 die Längsstreben 10 des Gefaches 4 dar.

Der Innenrahmen 34 wird mittels der Schraubbolzen 41 am Außenrahmen 2 befestigt, wobei sich die Schraubbolzen 41 durch die Langlöcher 49 des Innenrahmens 34 und die Langlöcher 53 der Leisten 44 des Inlays 3 hindurch erstrecken, um in die Gewindebohrungen 40 des Außenrahmens 2 einzugreifen.

Mittels dieser Schraubverbindungen sind der Innenrahmen 34, das Inlay 3 und der Außenrahmen 2 lösbar miteinander verbunden. Die Langlöcher 49, 53 erlauben eine gewisse Toleranz in der Anordnung des Innenrahmens 34 und des Inlays 3 in der Ebene des Backblechs 1 bezüglich des Außenrahmens 2.

Diese Schraubverbindungen erlauben es, dass ein Inlay 3 beliebig oft mit dem Außenrahmen 2 und dem Innenrahmen 34 getauscht werden kann.

Lediglich der Außenrahmen 2 ist aus Stahl ausgebildet. Dies dient einerseits einer hohen Festigkeit und andererseits einer hohen Abriebfestigkeit beim Gebrauch in einem industriellen Backofen. Die anderen Komponenten (mit Ausnahme der Schraubbolzen) sind aus Aluminium oder einer Aluminiumlegierung, ausgebildet. Das Material Aluminium bzw. Aluminiumlegierung weist eine hohe Wärmeleitfähigkeit auf, sodass sich die Hitze am Backblech 1 schnell verteilt, und ist andererseits ein leichtes Material, sodass das Backblech 1 insgesamt sehr leicht im Vergleich zu herkömmlichen Backblechen 1 ausgebildet ist.

Das Vorsehen des durch die Stützprofile 9 und die Stützbleche 10 ausgebildeten Gefaches 4 erlaubt die Verwendung eines dünnwandige Lochblechs 43, da das Lochblech 43 durch das Gefache 4 in regelmäßigen Abständen unterstützt wird. Im vorliegenden Ausführungsbeispiel beträgt der Abstand in Längsrichtung zwischen den Stützprofilen 9 weniger als 40 cm und in Querrichtung der Abstand zwischen den Stützblechen 10 weniger als 15 cm. Dadurch ist die Gefahr, dass ein derart unterstütztes Lochblech 43 sich durchbiegt, gering, selbst wenn das Lochblech 43 sehr dünnwandig ausgebildet ist.

Ein dünnwandiges Lochblech hat zudem gegenüber herkömmlichen dickeren Lochblechen den Vorteil, dass es nicht nur leichter ist, sondern eine sehr geringe Wärmekapazität aufweist und schnell die Umgebungstemperatur annimmt und damit die Backware schneller erhitzt wird, als dies auf einem dicken Lochblech der Fall ist.

Die Lochbleche 43 sind beschichtet. Typischerweise ist eine Anti-Haftschicht, insbesondere aus **PTFE,** aufgebracht. Diese Beschichtung nutzt sich mit der Zeit ab. Die Lochbleche 43 müssen deshalb ausgetauscht werden. Durch das Vorsehen dünnwandiger Aluminiumbleche wird der Materialverbrauch entsprechend reduziert. Das Austauschen der Lochbleche 43 ist daher kostengünstiger als bei herkömmlichen dickwandigen Lochblechen.

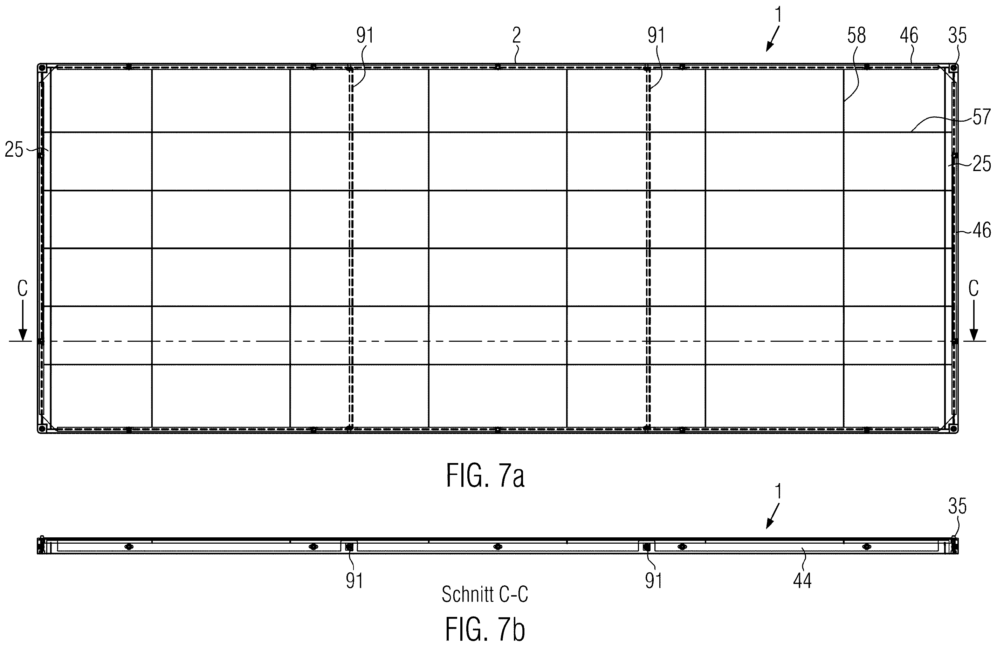

Ein drittes Ausführungsbeispiel eines Backblechs 1 für industriell betriebene Backanlagen wird im Folgenden anhand der Figuren 7a bis 10b erläutert.

Das Backblech 1 des dritten Ausführungsbeispiels ist ähnlich wie das Backblech 1 des zweiten Ausführungsbeispiels aus einem Außenrahmen 2 und einem Inlay 3 ausgebildet, weshalb gleiche Teile mit gleichen Bezugszeichen versehen sind und, wenn nichts anderes ausgeführt ist, die Erläuterungen zum zweiten Ausführungsbeispiel für die entsprechenden Teile gleichermaßen für das dritte Ausführungsbeispiel gelten.

Der Außenrahmen (Figur 7a bis Figur 8i) ist in der Draufsicht rechteckförmig aus zwei Längsseitenprofilen 5 und zwei Querseitenprofilen 6 ausgebildet, welche an den Ecken jeweils mittels einer Stapelecke 35 miteinander verbunden sind. Die Längsseitenprofile 5, die Querseitenprofile 6 und die Stapelecken 35 sind genauso wie beim zweiten Ausführungsbeispiel ausgebildet.

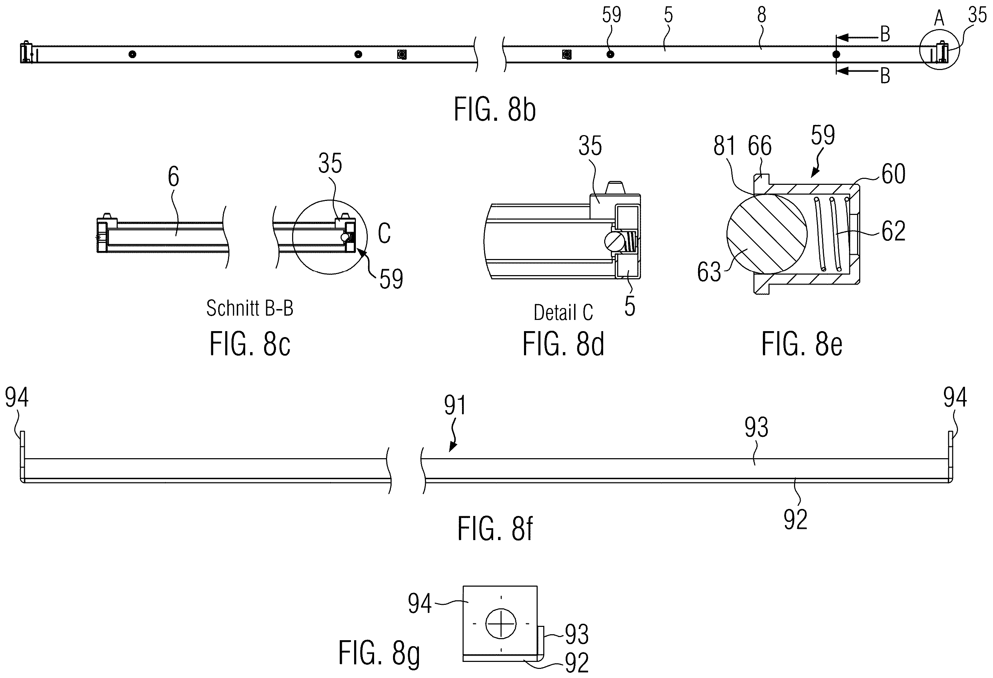

Anders als beim zweiten Ausführungsbeispiel sind an den Wandungen der Längsseitenprofile 5 mit Gewindebohrungen (nicht dargestellt) ausgebildet, in welche Schraubbolzen zum Verbinden der Längsseitenprofile 5 mit einem Stützblech 91 (Figur 8f, 8g), das sich zwischen den Längsseitenprofilen 5 erstreckt und parallel zu den Querseitenprofilen 6 verläuft. Das Stützblech 91 weist eine Bodenwandung 92 und eine Seitenwandung 93 auf, wobei die Seitenwandung 93 im rechten Winkel am Rand der Bodenwandung 92 angeformt ist. Das Stützblech 91 weist an seinen Enden jeweils eine Stirnwandung 94 auf, die senkrecht zur Bodenwandung 92 und Seitenwandung 93 ausgerichtet ist. Die Stirnwandung 94 erstreckt sich ein Stück über die Seitenwandung 93 nach oben hinaus. Im vorliegenden Ausführungsbeispiel weist die Seitenwandung 93 eine Höhe h von 7 mm auf (Figur 8f), wobei die Stirnwandung 94 den oberen Rand der Seitenwandung 93 um 8 mm überragt. In den Stirnwandungen 94 ist jeweils etwa mittig eine Durchgangsbohrung ausgebildet, welche von einem Schraubbolzen zum Befestigen des jeweiligen Stützblechs 91 durchgegriffen wird.

Im vorliegenden Ausführungsbeispiel sind zwei Stützbleche 91 am Außenrahmen 2 befestigt. Die Stützbleche 91 sind derart angeordnet, dass der obere Rand der Seitenwandung 93 von der Oberseite bzw. den oberen Schmalseitenwandungen 7 der Längsseitenprofile 5 ein Stück nach unten beabstandet sind.

Es können auch mehr als zwei Stützbleche 91 vorgesehen sein.

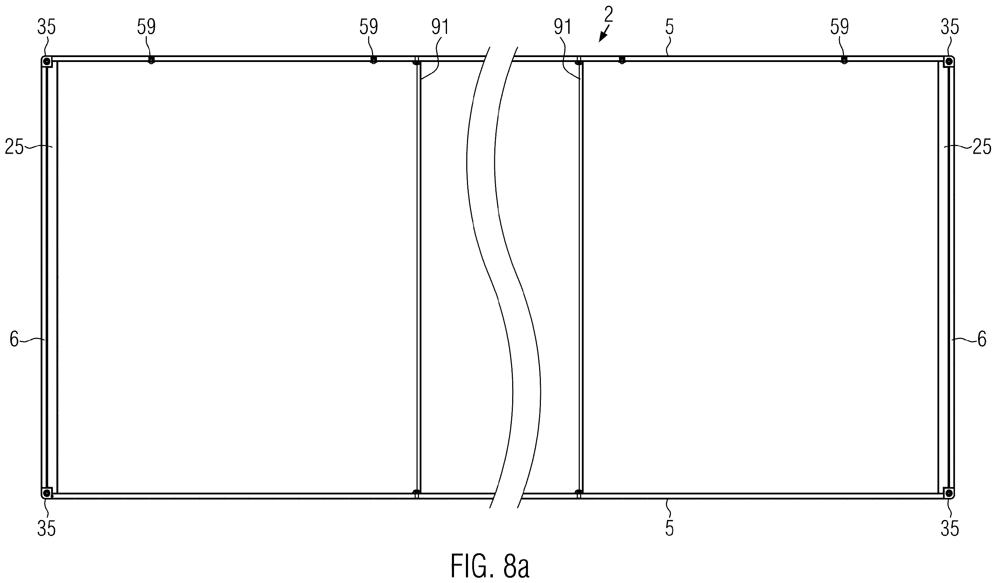

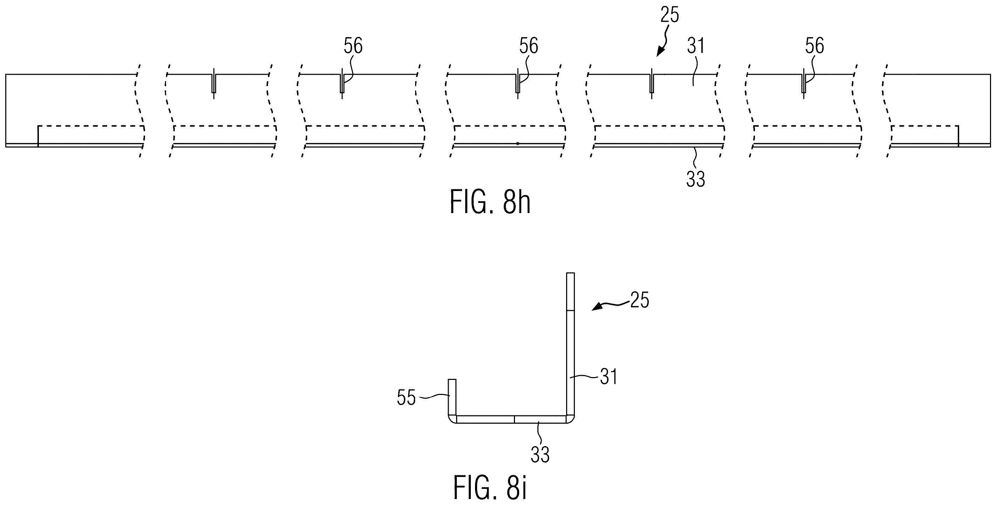

Der Außenrahmen 2 weist zwei Haltebleche 25 (Figur 8h, 8i) auf, welche jeweils benachbart bzw. angrenzend an den Querseitenprofilen 6 angeordnet sind (Figur 7a bzw. 8a). Die Haltebleche 25 weisen eine Haltewandung 31, eine Bodenwandung 33 und eine Fixierwandung 55 auf. Die drei Wandungen 31, 33, 55 bilden einen etwa L-förmigen Querschnitt (siehe Figur 8i), wobei sowohl die Haltewandungen 31 an einem Rand der Bodenwandung 33 und die Fixierwandung 55 am anderen Rand der Bodenwandung 33 senkrecht nach oben abstehen. Die Fixierwandung 55 dient dazu, das Halteblech 25 am Querseitenprofil 6 zu fixieren. Dies erfolgt beispielsweise mittels einer stoffschlüssigen Verbindung (Löten oder Schweißen). Die Haltewandung 31 ist hierbei um die Breite von der Bodenwandung 33 von der nach innen gerichteten Breitseitenwandung 8 des Querseitenprofils 6 beabstandet und verläuft parallel zu dieser nach innen gerichteten Breitseitenwandungen 8.

Das Halteblech 25 stellt auch eine Auflagefläche für Paternoster-Aufzüge zur Verfügung, welche die Backbleche im Bereich der Stirnseiten von unten greifen.

Die Haltewandung 31 weist in regelmäßigen Abständen an ihrem oberen, freien Rand vertikal nach unten verlaufende Einschnitte 56 auf. Die Einschnitte 56 weisen im vorliegenden Ausführungsbeispiel eine Tiefe von 8 mm und eine Breite von 1-2 mm auf und münden am oberen Rand der Haltewandung 31, sodass von oben in die Einschnitte 56 Längsstreben 57 eines Gefaches 4 eingesetzt werden können. Das Gefache 4 ist aus den Längsstreben 57 und aus Querstreben 58 ausgebildet, wobei die Längsstreben 57 und die Querstreben 58 jeweils aus Stahlstreifen bestehen, die im vorliegenden Ausführungsbeispiel eine Breite von 8 mm aufweisen. Die Längsseiten 57 und Querstreben 58 weisen jeweils in regelmäßigen Abständen Einschnitte auf, sodass sie an den Kreuzungspunkten des Gefaches 4 ineinandergesteckt werden können. Die Einschnitte an den Längsstreben 57 erstrecken sich vom oberen Rand der Längsstrebe 57 bis etwa zur Mitte der Längsstrebe 57 und die Einschnitte der Querstreben 58 erstrecken sich vom unteren Rand bis etwa zur Mitte der Querstreben 58, sodass die Querstreben 58 von unten durch die Längsstreben 57 gestützt werden.

Das Gefache 4 kann somit in die Einschnitte 56 der Haltewandungen 31 eingesetzt werden und hält aufgrund der Schwerkraft sicher in den Halteblechen 25, auch wenn das Inlay 3 noch nicht in das Backblech 1 eingesetzt sein sollte.

Am Außenrahmen 2 sind im Bereich der Längsseitenprofile 5 jeweils mehrere federnde Druckstücke 59 (Figur 7a, 8b-8e) vorgesehen.

Ein solches federndes Druckstück 59 ist aus einem sacklochförmigen Gehäuse 60 ausgebildet, das am freien Rand einen nach außen weisenden Kragen 61 aufweist und in dem eine Druckfeder 62 angeordnet ist, welche eine Kugel 63 nach außen drückt. Durch einen umlaufenden nach innen weisenden Vorsprung 81 am freien Rand des Gehäuses 60 wird die Kugel 63 daran gehindert, vollständig aus dem Gehäuse 60 auszutreten (Fig. 8e).

Mehrere dieser federnden Druckstücke 59 sind an den nach innen weisenden Breitseitenwandungen 8 der Längsseitenprofile 5 derart angeordnet, dass die federbeaufschlagte Kugel 63 etwas an der Breitseitenwandung 8 des Längsseitenprofils 5 nach innen vorsteht.

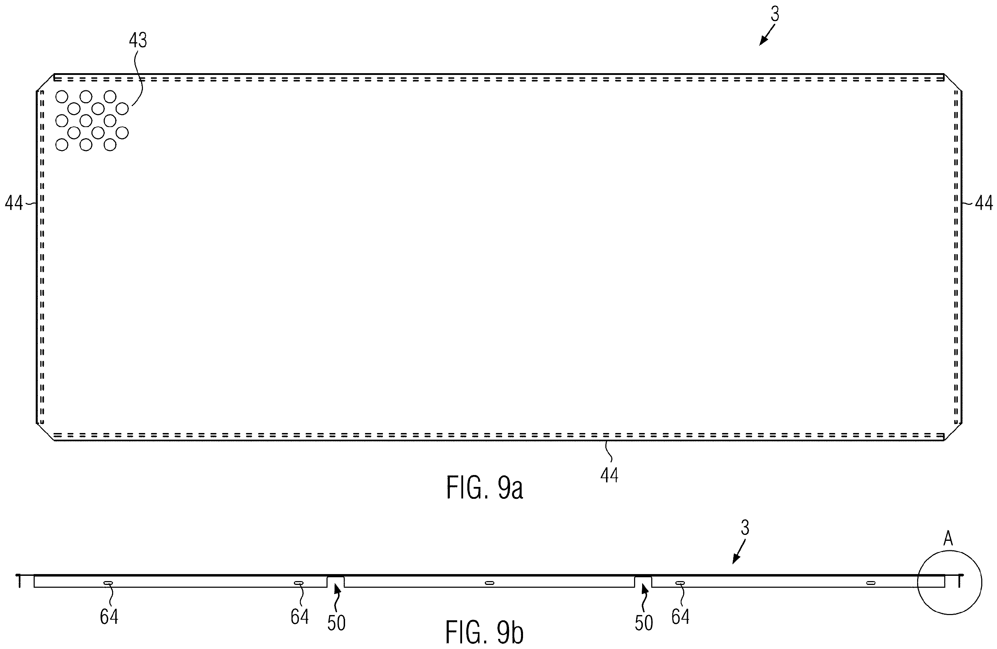

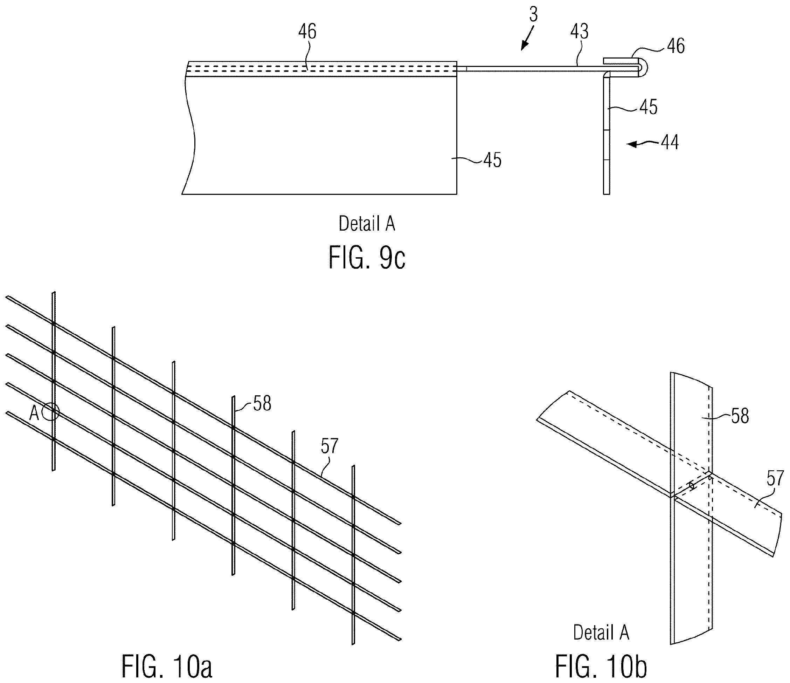

Das Inlay 3 weist im dritten Ausführungsbeispiel genauso wie beim zweiten Ausführungsbeispiel ein Lochblech 43 auf und ist am Rand des Lochblechs 43 mit angeklemmten Leisten 44 versehen (Figur 9a bis Figur 9c). Die Ausbildung des Inlays 3 dieses dritten Ausführungsbeispiels stimmt mit dem Inlay 3 des zweiten Ausführungsbeispiels überein, weshalb auf die entsprechenden Erläuterungen zum zweiten Ausführungsbeispiel verwiesen wird.

Das Inlay 3 des dritten Ausführungsbeispiels unterscheidet sich vom Inlay 3 des zweiten Ausführungsbeispiels dadurch, dass die Leisten 44 entlang dem Längsrand des Inlays 3 Ausnehmungen 50 aufweisen, sodass die Leisten 44 unterbrochen sind. Im Bereich der Ausnehmungen 50 sind die Stützbleche 91 mit ihren Stirnwandungen 94 im vollständig zusammengebauten Backblech 1 (Figur 7a) angeordnet.

Weiterhin sind in den Leisten 44 entlang der Längsränder des Inlays 3 Langlöcher 64 ausgebildet. Die Langlöcher 64 sind jeweils korrespondierend zu den federnden Druckstücken 59 des Außenrahmens 2 positioniert, sodass beim Einsetzen des Inlays 3 die Leisten 44 an den Innenseiten der Längsseitenprofile 5 und Querseitenprofile 6 anliegen, wobei die Leisten 44 an den Längsseitenprofilen 5 mit den Langlöchern 64 an den federnden Druckstücken 59 verrastet sind, indem die Kugeln 63 jeweils in eines der Langlöcher 64 eingreifen.

Die Verbindung zwischen dem Inlay 3 und dem Außenrahmen 2 ist somit eine Rastverbindung, die einfach gelöst werden kann.

Wenn das Inlay 3 im Außenrahmen 2 fixiert ist, dann sind auch die Längsstreben 57 und Querstreben 58 des Gefaches 4 gegen ein Herausfallen gesichert.

Das Backblech 1 gemäß dem dritten Ausführungsbeispiel weist einen einfachen Aufbau auf, bei dem das Inlay 3 und der Außenrahmen 2 wiederholt lösbar miteinander durch die Rastverbindung befestigt werden können, wobei das Inlay 3 durch das Gefache 4 unterstützt wird, sodass das Inlay 3 ein sehr dünnes Lochblech 43 aufweisen kann und zudem der Außenrahmen 2 schlank und damit leicht und dennoch stabil ausgebildet ist.

Bei einer Größe des Backblechs 1 von ca. 2 m x 0,8 m kann bei diesem dritten Ausführungsbeispiel ein Gewicht von etwa 8 kg erzielt werden, was fast eine Halbierung des Gewichtes gegenüber herkömmlichen Backblechen 1 bedeutet.

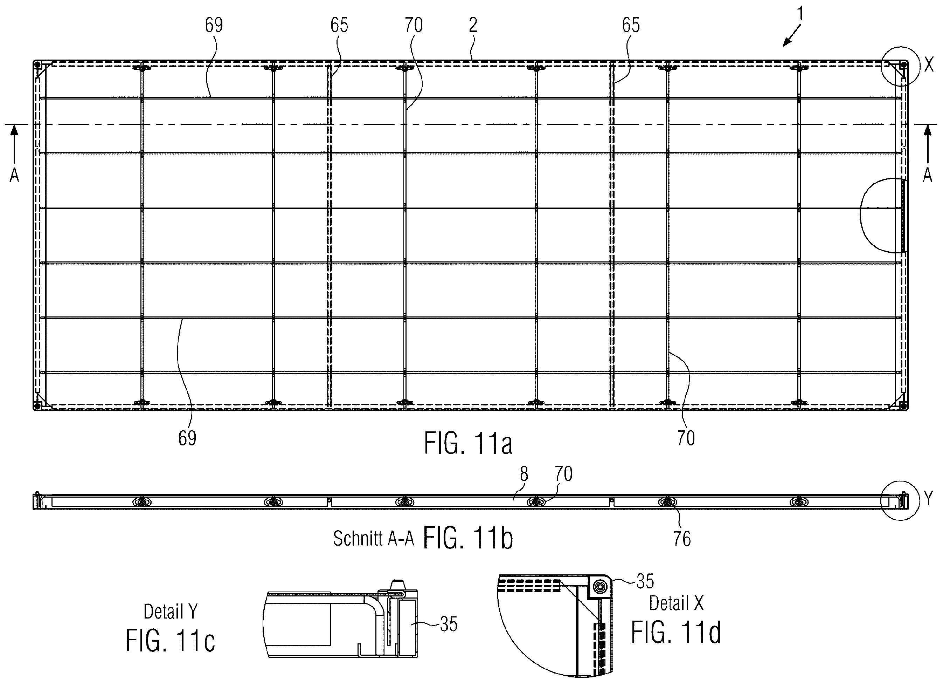

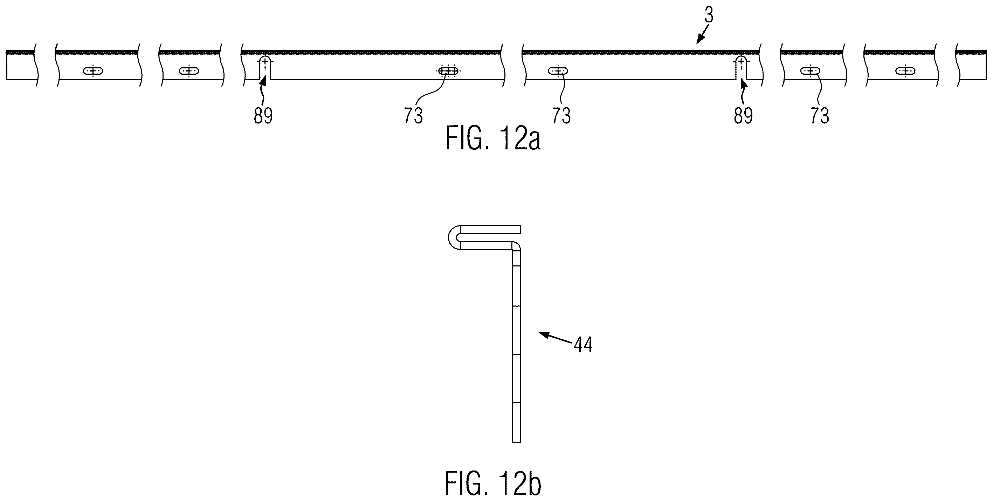

Nachfolgend wird ein viertes Ausführungsbeispiel eines Backblechs 1 für industriell betriebene Backanlagen anhand der Figuren 11a bis 17b erläutert.

Das Backblech 1 des vierten Ausführungsbeispiels ist ähnlich wie das Backblech 1 des dritten Ausführungsbeispiels aus einem Außenrahmen 2 und einem separaten Inlay 3 ausgebildet, weshalb gleiche Teile mit gleichen Bezugszeichen versehen sind, und, wenn nichts anderes ausgeführt ist, die Erläuterungen zum dritten Ausführungsbeispiel für die entsprechenden Teile gleichermaßen für die korrespondierenden Teile des vierten Ausführungsbeispiels gelten.

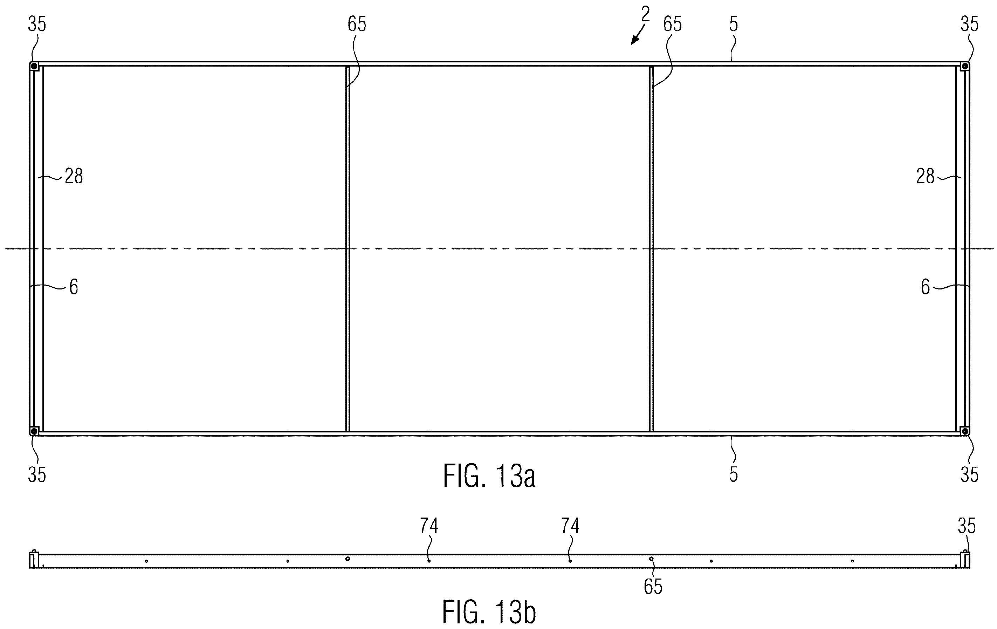

Der Außenrahmen (Figur 11a bis 11d, Figur 13a und 13b) ist in der Draufsicht rechteckförmig aus zwei Längsseitenprofilen 5 und zwei Querseitenprofilen 6 ausgebildet, welche an den Ecken jeweils mittels einer Stapelecke 35 miteinander verbunden sind. Die Längsseitenprofile 5, die Querseitenprofile 6 und die Stapelecken 35 sind genauso wie beim zweiten und dritten Ausführungsbeispiel ausgebildet.

Anders als beim dritten Ausführungsbeispiel sind an den Wandungen der Längsseitenprofile 5 Bohrungen (nicht dargestellt) ausgebildet, die zur Aufnahme jeweils einer Versteifungsstange 65 dienen. Die Versteifungsstangen 65 sind beispielsweise Stangen mit kreisförmigem Querschnitt, welche in die entsprechenden Bohrungen lose eingesetzt oder mittels einer stoffschlüssigen Verbindung (Schweißen oder Löten) an den Längsseitenprofilen 5 fixiert sind. Im vorliegenden Ausführungsbeispiel weist der Außenrahmen 2 zwei Versteifungsstangen 65 auf, die parallel zu den Querseitenprofilen 6 verlaufen. Es können selbstverständlich auch mehrere Versteifungsstangen 65 vorgesehen sein.

Sind die Versteifungsstangen 65 fest mit dem Längsseitenprofilen 5 verbunden, dann können sie auch Zugkräfte übernehmen, wodurch der Außenrahmen 2 insgesamt versteift wird. Die Versteifungsstangen 65 können auch auf andere Weise als mit einer stoffschlüssigen Verbindung, beispielsweise mit einer Schraubverbindung, an den Längsseitenprofilen 5 befestigt werden. Die Versteifungsstangen 65 des vorliegenden Ausführungsbeispiels sind Vollkörper. Anstelle eines solchen Vollkörpers kann auch ein Versteifungsrohr vorgesehen sein. Die Versteifungsstangen 65 sind vorzugsweise aus dem gleichen Material wie der übrige Außenrahmen 2, nämlich Chrom-Nickel-Stahl ausgebildet.

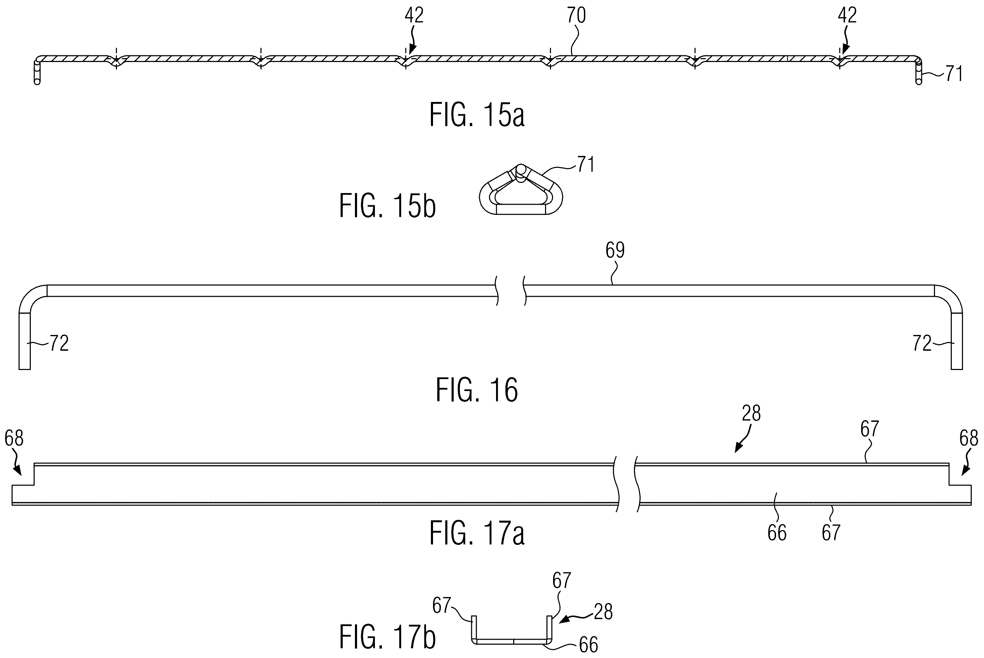

Der Außenrahmen 2 weist zwei Haltebleche 28 (Figur 17a, 17b) auf, der jeweils benachbart bzw. angrenzend an den Querseitenprofilen 6 angeordnet sind (Figur 11a bzw. 13a). Die Haltebleche 28 sind im Querschnitt U-förmig (Figur 17b) ausgebildet mit einer Bodenwandung 66 und zwei U-Schenkeln 67. Mit einem der beiden U-Schenkel 67 ist das Halteblech 28 an dem benachbarten Querseitenprofil 6 derart befestigt, dass die Öffnung des U-förmigen Halteblechs 28 nach oben weist. Das Halteblech 28 weist an seinen Enden jeweils rechteckförmige Aussparungen 68 auf, in welchen die Stapelecken 35 des zusammengebauten Außenrahmens 2 Platz finden.

Die Haltebleche 28 sind im vorliegenden Ausführungsbeispiel mit einer stoffschlüssigen Verbindung (Schweißen und Löten) an den Querseitenprofilen 6 befestigt. Sie können jedoch auch mit jedem beliebigen anderen Verbindungsmittel, wie z.B. einer Schraubverbindung, daran befestigt sein. Die Haltebleche 28 sind aus Chrom-Nickel-Stahl ausgebildet.

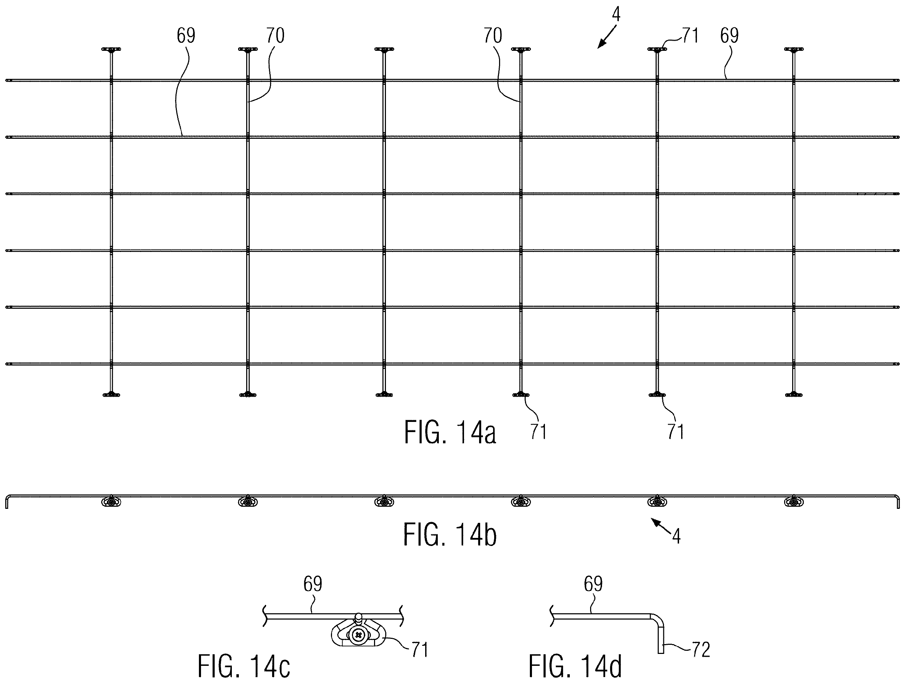

Das Gefache 4 (Figur 14a bis 14d, 15a, 15b, 16) ist im vorliegenden Ausführungsbeispiel aus einem Drahtgeflecht mit Längsdrähten 69 und Querdrähten 70 ausgebildet.

Die Querdrähte 70 (Figur 15a, 15b) besitzen eine Länge, sodass sie sich zwischen den Längsseitenprofilen 5 erstrecken. An ihren Enden sind die Querdrähte 70 nach unten abgewinkelt (Figur 15a) und zur Ausbildung von Schraubenösen 71 entsprechend gebogen. Die Schraubenösen 71 bilden ein gleichschenkliges Dreieck mit runden Ecken (Figur 15b).

An den Querdrähten 70 ist in regelmäßigen Abständen jeweils eine Scharte 42 ausgebildet, die zur Aufnahme jeweils eines Längsdrahtes 69 dient. Die Scharte 42 ist durch einen Abschnitt des Querdrahtes 70 ausgebildet, der gegenüber dem übrigen Querdraht 70 ein Stück nach unten gekrümmt ist.

Die Längsdrähte (Figur 16) sind im Wesentlichen geradlinige Drähte, welche eine derartige Länge aufweisen, dass sie sich zwischen den Querseitenprofilen 6 erstrecken können. An den Enden sind die Längsdrähte 69 jeweils ein Stück nach unten gebogen, sodass jeweils ein vertikaler Stützabschnitt 72 ausgebildet ist.

Das Inlay 3 weist im vierten Ausführungsbeispiel genauso wie beim zweiten und dritten Ausführungsbeispiel ein Lochblech 43 auf und ist am Rand des Lochblechs 43 mit daran geklemmten Leisten 44 versehen.

Das Inlay 3 des vierten Ausführungsbeispiels unterscheidet sich vom Inlay 3 des zweiten und dritten Ausführungsbeispiels dadurch, dass die Leisten 44 entlang dem Längsrand des Inlays 3 Langlöcher 73 aufweisen, die so angeordnet sind, dass sie den Positionen entsprechender Gewindebohrungen 74 an der nach innen weisenden Breitseitenwandung 8 der Längsseitenprofile 5 entsprechen. Zudem sind die Leisten 44 entlang dem Längsrand des Inlays 3 mit Ausnehmungen 89 ausgebildet, die nach unten offen sind, um so im zusammengebauten Zustand des Backblechs 1 die Versteifungsstangen 65 aufnehmen zu können.

Das Backblech 1 wird derart zusammengebaut, dass das Inlay 3 und das Gefache 4 in den Außenrahmen 2 eingesetzt werden und mit Schraubbolzen 76 (Figur 11b) die Schraubösen 71 der Querdrähte 70 an den Längsseitenprofilen 5 befestigt werden. Hierbei befinden sich die Leisten 44 entlang dem Längsrand des Inlays 3 mit ihren Langlöchern 73 im Bereich zwischen jeweils einer Schrauböse 71 des Querdrahts 70 und einer Gewindebohrung 74 des Längsseitenprofils 5, sodass mit dem Schraubbolzen 76 nicht nur der Querdraht 70, sondern auch gleichzeitig das Inlay 3 am Außenrahmen 2 befestigt wird. Die Längsdrähte 69 lagern in den Scharten 42 der Querdrähte 70 und stützen sich mit ihren vertikalen Stützabschnitten 72 am Halteblech 28 ab.

Das aus dem Querdrähten 70 und Längsdrähten 69 ausgebildete Gefache 4 stützt, genauso wie bei den anderen Ausführungsbeispielen, das Lochblech 43 des Inlays 3 von unten ab.

Das Backblech 1 des vierten Ausführungsbeispiels ist aufgrund des schlanken Außenrahmens 2 und der Unterstützung des Lochblechs 43 von unten durch das Gefache 4 im Vergleich zu herkömmlichen industriellen Backblechen 1 mit geringem Gewicht ausgebildet. Zudem können die Schraubverbindungen, mit welchen sowohl das Inlay 3 als auch das Gefache 4 am Außenrahmen 2 befestigt sind, mit handelsüblichen Werkzeugen gelöst und wieder neu befestigt werden, sodass ein Austausch des Inlays 3 nach Abnutzung der Beschichtung des Lochblechs 43 von jedem Teilnehmer in der Produktionskette der Herstellung von Backwaren vorgenommen werden kann.

Die oben erläuterten Ausführungsbeispiele eines Backblechs 1 weisen jeweils als Inlay 3 ein Lochblech (Figur 18) auf.

Das Inlay 3 der Ausführungsbeispiele kann anstelle eines Lochbleches 77 auch ein Streckmetall 78 (Figur 19) aufweisen. Sowohl das Lochblech 77 als auch das Streckmetall 78 sind aus Aluminium oder einer Aluminiumlegierung ausgebildet. An der Oberseite sind sie jeweils mit einer Anti-Haft-Beschichtung versehen, welche zum Beispiel aus **PTFE** ausgebildet sein kann. Der Vorteil eines Streckmetalls 78 gegenüber einem Lochblech ist der große Anteil an Öffnungen an der Gesamtfläche. Hierdurch wird die Backware von unten schneller und besser erhitzt. Dies steigert die Qualität des Backproduktes.

Das Streckmetall kann bspw. von der Firma MEVACO mit der Produktbezeichnung "Raute 6x3x0,7" sein.

Das Inlay 3 kann anstelle eines Lochblechs oder Streckmetalls 78 auch ein Gitternetz 79 aufweisen.

Ein eigensteifes Gitternetz 79 kann beispielsweise aus Metalldrähten, insbesondere Aluminiumdrähten, ausgebildet sein. Die einzelnen Drähte können sich wie in einem Gewebe abwechselnd überkreuzen. Die Drähte können jedoch auch an den Kontaktstellen materialschlüssig mittels einer Löt- oder Schweißverbindung verbunden sein.

Das Gitternetz 79 kann auch aus einem flexiblen Gitternetz 79 ausgebildet sein, wie zum Beispiel einem Gewebe aus temperaturstabilen Filamenten. Die einzelnen Filamente des Gewebes können hierbei Glasfasern sein. Die Glasfasern sind vorzugsweise mit einem Kunststoff ummantelt bzw. imprägniert. Ein solches Filament kann eine einzelne langgestreckte Faser aufweisen. Anstelle von Glasfasern können auch andere temperaturstabile Fasern, insbesondere mineralische Fasern, wie zum Beispiel Siliziumcarbidfasern, verwendet werden.

Ein Filament des Gewebes kann jedoch auch mehrere Fasern umfassen. Diese Fasern können im Filament zueinander parallel verlaufen (Roving). Mehrere Fasern können jedoch auch miteinander verflochten sein (Yarn). Die einzelnen oder mehreren Fasern sind vorzugsweise in einen temperaturstabilen Kunststoff, wie zum Beispiel PTFE, Silikon oder Epoxy eingebettet.

Ein Inlay 3, insbesondere wenn es aus einem solchen Gewebe, besteht, weist im Vergleich zu herkömmlichen Inlays 3 von Backblechen 1 ein extrem geringes Gewicht und eine extrem geringe Wärmekapazität auf. Beides ist vorteilhaft für die Effizienz des Backbleches 1 im Betrieb.

Ist das Backblech 1 ein flexibles Gitternetz 79, dann kann das Inlay 3 vier Leisten 44 aufweisen, wie sie beispielsweise in den Figuren 5a-5c bzw. 9a bis 9c bzw. Figur 12a, 12b gezeigt sind. Diese Leisten 44 klemmen mit ihren Bördelabschnitten 46 den Rand des Gitternetzes 79. Diese Leisten 44 können beispielsweise mit einer Schraubverbindung jeweils an einem Längsseitenprofil 5 bzw. Querseitenprofil 6 des Rahmens 2 befestigt werden, wobei beim Anschrauben die Leisten 44 an die jeweiligen Profile 5, 6 herangezogen werden, sodass das flexible Gitternetz 79 gespannt wird. Bei dieser Ausführungsform hat die Schraubverbindung nicht nur die Funktion ein einfaches Austauschen des Inlays 3 am Rahmen 2 zu ermöglichen, sondern auch die Funktion des Spannens des flexiblen Gitternetzes 79 im Backblech 1, sodass trotz der sehr leichten und flexiblen Ausgestaltung des Gitternetzes 79 eine stabile Auflage für die Backwaren bereitgestellt wird.

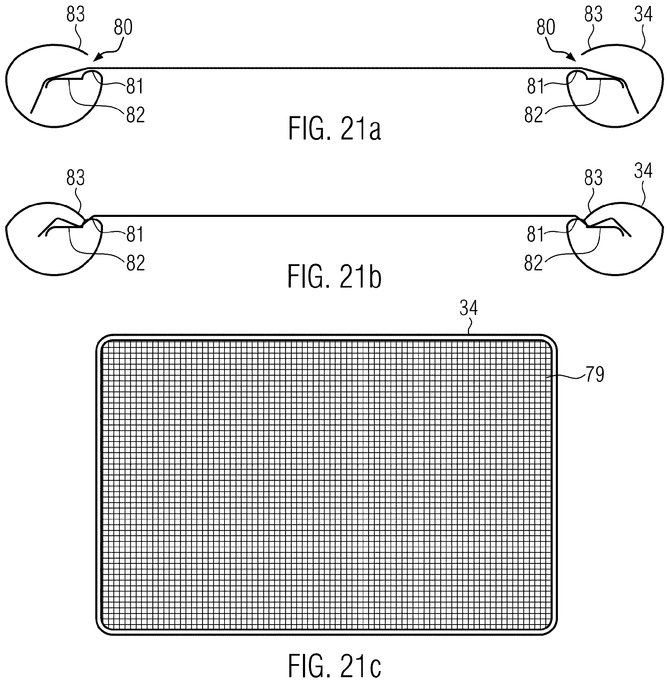

In einer alternativen Ausführungsform kann das Gitternetz 79 in einen umlaufenden Innenrahmen 34 (Figur 21a bis 21c) eingesetzt und hiermit gespannt werden. Dieser Innenrahmen 34 weist im Querschnitt eine etwa kreisförmige Form auf, welche an der nach innen weisender Seite mit einem Schlitz 80 ausgebildet ist. Am unteren Rand des Schlitzes 80 bildet das Profil einen nach oben weisendem gebogenem Vorsprung 81 aus, der im Inneren des Profils in einen Auflagebereich 82 übergeht, der im vorliegenden Ausführungsbeispiel etwa ebenflächig ausgebildet ist.

Das Gitternetz 79 wird in den umlaufenden Schlitz 80 des Innenrahmens 34 mit seinem Randabschnitt eingeführt und dann wird der obere Abschnitt des Profils nach unten gedrückt, sodass eine freie Kante 83 des oberen Abschnittes von oben auf das Gitternetz 79 drückt und dieses entlang dem Vorsprung 81 nach unten und nach innen in den Innenrahmen 34 zieht. Hierdurch wird das Gitternetz 79 gespannt und der obere Abschnitt des Profils verkeilt sich an dem Vorsprung 81, wodurch das Gitternetz 79 im Innenrahmen 34 unter Spannung fixiert ist.

Der Innenrahmen 34 kann dann zur Ausbildung eines Backblechs 1 am Außenrahmen 2 fixiert werden. Hierzu können Rast- und/oder Schraubverbindungen vorgesehen sein. Hierzu können am Innenrahmen 34 zusätzliche Leisten 44 mit entsprechenden Rastelementen oder Löcher für Schraubverbindungen ausgebildet sein.

Ein solcher Innenrahmen 34 mit eingespanntem Gitternetz 79 kann auch ohne zusätzlichen Außenrahmen 2 ein Back-Off-Backblech 1 ausbilden, bei welchem die Anforderungen an die Festigkeit geringer als bei einem Backblech 1 für industrielle Backstraßen sind.

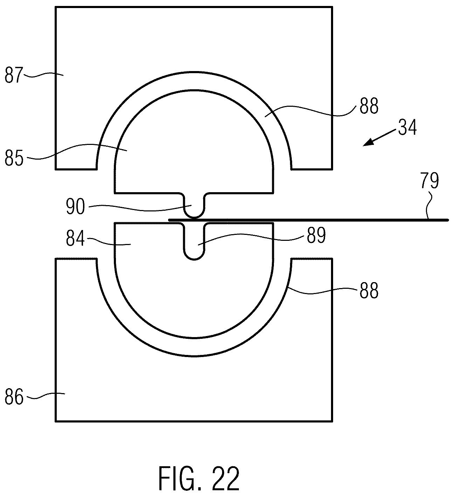

Im Rahmen der Erfindung sind auch unterschiedliche weitere Ausgestaltungen der Spanneinrichtungen zum Spannen eines flexiblen Gitternetzes 79 möglich. So ist beispielsweise in Figur 22 ein Innenrahmen 34 gezeigt, der aus vier separaten Einheiten jeweils entlang einer der Längsseiten und jeweils entlang einer der Querseiten des Rahmens ausgebildet ist, wobei diese jeweils ein unteres und oberes Profilelement 84, 85 umfassen, zwischen welchen das Gitternetz 79 eingeklemmt werden kann. Das untere Profilelement 84 weist eine entsprechende schlitzförmige Ausnehmung 89 auf, in welche ein entsprechender Klemmvorsprung 90 des oberen Profilelementes 85 eingreift, sodass zwischen dem unteren und oberen Profilelement 84, 85 das Gitternetz 79 fixiert ist.

Der Außenrahmen 2 ist hierbei auch zweiteilig ausgebildet mit einem unteren Rahmenteil 86 und einem oberen Rahmenteil 87. Die unteren und oberen Rahmenteile 86, 87 weisen jeweils Spannschrägen 88 auf, sodass der in den Außenrahmen 2 eingesetzte Innenrahmen 34 nach außen gezogen wird und das Gitternetz 79 gespannt wird, wenn die unteren und oberen Rahmenteile 86, 87 zusammengedrückt werden. Hierbei ist zu beachten, dass das untere und obere Rahmenteil 86, 87 des Außenrahmens 2 jeweils umlaufend einteilig ausgebildet sind, wohingegen das untere und obere Profilelement 84, 85 sich jeweils nur entlang einer Längsseite bzw. Querseite des Inlays 3 bzw. des Gitternetzes 79 erstrecken, sodass die einzelnen Abschnitte der Profilelemente 84, 85 unabhängig voneinander nach außen gezogen werden können, um das Gitternetz 79 zu spannen.

Einige Ausführungsbeispiele weisen Leisten 44 auf, welche Bestandteil des Inlays 3 sind und durch Klemmen am Lochblech, Streckmetall oder Gitternetz befestigt sind. Bei Verwendung eines Lochblechs ist es auch möglich, die Leisten einteilig aus dem Lochblech auszubilden und die entsprechenden Abschnitte im rechten Winkel nach unten abzubiegen. Die Leisten weisen dann vorzugsweise nicht die Löcher des Lochblechs auf, aber sind mit allen anderen Ausnehmungen und Löchern ausgebildet, wie die oben erläuterten Leisten 44. Sie unterscheiden sich nur durch dir unmittelbare Anbindung an dem übrigen Lochblech. Das Gleiche gilt auch für das Treckmetall, sofern das Streckmetall Randbereiche ohne Durchgangsöffnungen aufweist, die als Leisten geeignet sind.

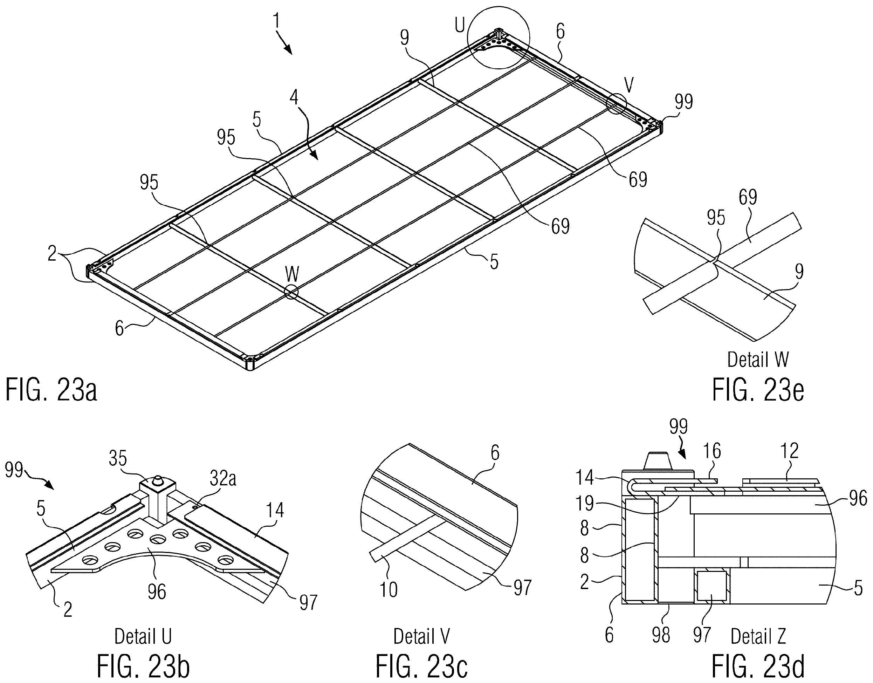

Das Backblech 1 des fünften Ausführungsbeispiels ist ähnlich wie das Backblech 1 des vierten Ausführungsbeispiels aus einem Außenrahmen 2 und einem Inlay 3 ausgebildet, weshalb gleiche Teile mit gleichen Bezugszeichen versehen sind und, wenn nichts anderes ausgeführt ist, die Erläuterungen zum vierten Ausführungsbeispiel für die entsprechenden Teile gleichermaßen für das fünfte Ausführungsbeispiel gelten (Fig. 23a bis 23e).

Der Außenrahmen 2 ist wiederum aus den zwei Querseitenprofilen 6 und den zwei Längsseitenprofilen 5 ausgebildet, die mit den Stapelecken 35 verbunden sind.

Das Inlay 3 des Backbleches 1 des fünften Ausführungsbeispiels umfasst ein Streckmetall (nicht dargestellt), das Löcher aufweist und aus Aluminium gefertigt ist. Das Streckmetall wird unterstützt von dem Gefache 4, das durch Querstreben 9 und Längsdrähte 69 gebildet ist. Die Längsdrähte 69 sind in entsprechenden Durchgangsbohrungen in den Querstreben 9 aufgenommen. Die Querstreben 9 und die Längsdrähte 69 sind an ihren Kreuzungspunkten 95 vorzugsweise stoffschlüssig miteinander verbunden, bspw. mit einer Löt- oder Schweißverbindung (Fig. 23e). Eine Klebeverbindung ist auch geeignet. Das Gefache 4 kann auch fest, insbesondere stoffschlüssig mit dem Außenrahmen 2 verbunden sein. Durch die verbundenen Kreuzungspunkte 95 wird das Gefache 4 in seiner Form stabilisiert und dadurch ist die Festigkeit der aus Außenrahmen 2 und Gefache 4 bestehenden Einheit hoch, selbst wenn das Rahmenprofil nur eine geringe Breite aufweist. Mit einer Niete 32a ist die Querschiene 14 auf der Oberseite des Querseitenprofils 6 fixiert. Anstelle einer Niete kann auch ein Schraubbolzen oder ein anderes geeignetes Verbindungsmittel verwendet werden, wie es oben bspw. beim ersten Ausführungsbeispiel erläutert ist.

Die Eckbereiche 47 des Backblechs 1 gemäß dem fünften Ausführungsbeispiel weisen jeweils eine Stabilisierungsecke 96 auf. Die Stabilisierungsecken 96 sind jeweils aus einem gelochten Blechabschnitt ausgebildet, der in der Draufsicht zwei zueinander rechtwinklig angeordnete Begrenzungskanten aufweist. Die Stabilisierungsecken 96 stützen sich seitlich an den jeweiligen Querseitenprofilen 6 und den Längsseitenprofilen 5 ab. Die Stabilisierungsecke 96 nimmt Scherkräfte auf, die sich in der Rahmenebene ausbilden und verhindert damit, dass sich die Querseitenprofile 6 und Längsseitenprofile 5 gegeneinander verschieben, so dass der Rahmen 2 formstabil bleibt. Parallel zum Querseitenprofil 6 verläuft innenseitig ein optionales Profilrohr 97. Die jeweilige Stabilisierungsecke 96 kann an diesem Profilrohr 97, an dem zugehörigen Querseitenprofil 6, und/oder an dem zugehörigen Längsseitenprofilen 5 befestigt sein. Das Profilrohr 97 trägt zu einer zusätzlichen Versteifung des Rahmens bei.

Der Längsdraht 69 ist am Querseitenprofil 6 fest, insbesondere stoffschlüssig befestigt und verläuft oberhalb des Profilrohrs 97, das sich als Bestandteil des Querseitenprofil 6 parallel zum Querseitenprofil 6 erstreckt (Fig. 23c).

Das Profilrohr 97 ist parallel von der Schmalseitenwandung 8 beabstandet und kann mit einem Verbindungsblech 98 in einem konstanten Abstand von der Schmalseitenwandung 8 an diesem befestigt sein. Die Stabilisierungsecke 96 ist oberhalb des Profilrohrs 97 in einem bestimmten Abstand zum Profilrohr 97 befestigt (Fig. 23d).

Das Gewicht dieses Backbleches beträgt etwa 8,9 kg (7,8 kg VA-Stahl und 1,1 kg Aluminium).

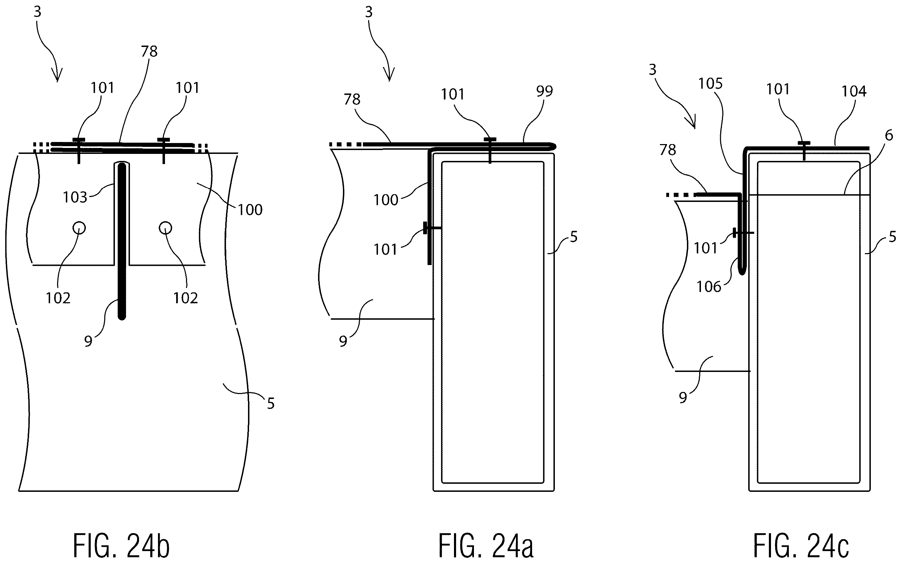

Das Backblech 1 des sechsten Ausführungsbeispiels ist ähnlich wie das Backblech 1 des fünften Ausführungsbeispiels aus einem Außenrahmen 2 und einem Inlay 3 ausgebildet, weshalb gleiche Teile mit gleichen Bezugszeichen versehen sind und, wenn nichts anderes ausgeführt ist, die Erläuterungen zum fünften Ausführungsbeispiel für die entsprechenden Teile gleichermaßen für das sechste Ausführungsbeispiel gelten (Fig. 24a bis 24b).

Der Außenrahmen 2 (nicht gezeigt) ist wiederum aus den zwei Querseitenprofilen 6 (nicht gezeigt) und den zwei Längsseitenprofilen 5 ausgebildet, die mit den Stapelecken 35 (nicht gezeigt) verbunden sind.

Das Inlay 3 des Backbleches 1 des sechsten Ausführungsbeispiels umfasst ein Streckmetall 78, das Löcher aufweist und aus Aluminium gefertigt ist. Das Streckmetall 78 wird wiederum unterstützt von dem Gefache, das durch Querstreben 9 oder Querdrähte (nicht gezeigt) und Längsdrähte 69 (nicht gezeigt) oder Längsstreben 10 (nicht gezeigt) gebildet wird.

Die Querstreben 9 sind mit ihren Enden fest, insbesondere stoffschlüssig mit dem Querprofil 5 verbunden. Das Inlay 4 ist zum äußeren Rand des Längsseitenprofils 5 gefalzt, also nach unten umgeschlagen und bildet einen Bördelrand 99. Der Bördelrand 99 ist somit zweilagig ausgebildet und verläuft dementsprechend auf der oberen Fläche des Längsseitenprofils 5. Der obere Abschnitt des Bördelrandes 99 geht kontinuierlich über zur Auflagefläche der Backwaren, die aus dem mit Löchern versehenen Streckmetall 78 ausgebildet ist. Der untere Abschnitt des Bördelrandes 99 verläuft zurück zur Mitte hin, so dass die beiden Abschnitte des Bördelrandes 99 flächig aufeinander liegen. Am inneren Rand des Längsseitenprofils 5 ist das Inlay 4 nach unten im rechten Winkel abgewinkelt und liegt mit einem Abschnitt an dem inneren Rand des Längsseitenprofils 5 flächig an und bildet so eine Falzleiste 100. Das Inlay 4 kann mit den Falzleisten 100 zu beiden Seiten am inneren Rand des Längsseitenprofils 5 anliegen und damit nicht mehr seitlich verrutschen. Alternativ oder zusätzlich kann ein Bördelrand 99 und/oder eine Falzleiste 100 auch entlang den Querseitenprofilen 6 ausgebildet sein. Das Inlay 4 kann mit Schrauben 101 von oben durch den Bördelrand 99 und/oder von der Seite durch die Falzleiste100 mit dem Längsseitenprofil 5 bzw. Querseitenprofil 6 (nicht gezeigt) verbunden werden (Fig. 24a). Hierzu können Gewindelöcher 102 (Fig. 24b) in das Längsseitenprofil 5 gebohrt werden und deckungsgleiche Löcher im Falzbereich, also am Bördelrand 99 und/oder an der Falzleiste 100 vorhanden sein. Die Falzleiste 100 weist auf der Höhe der Querstreben 9 jeweils einen nach unten offenen Ausschnitt 103 auf, in die die Querstreben 9 eingreifen. Dadurch kann der Bördelrand 99 auf der Oberseite des Längsseitenprofils 5 anliegen und die Querstreben 9 das Inlay von unten unterstützen. Weiterhin wird damit verhindert, dass sich das Inlay 4 in Längsrichtung verschieben kann.

Ein Backblech 1 eines siebten Ausführungsbeispiels ist ähnlich wie das Backblech 1 des sechsten Ausführungsbeispiels aus einem Außenrahmen 2 und einem Inlay 3 ausgebildet, weshalb gleiche Teile mit gleichen Bezugszeichen versehen sind und, wenn nichts anderes ausgeführt ist, die Erläuterungen zum sechsten Ausführungsbeispiel für die entsprechenden Teile gleichermaßen für das siebte Ausführungsbeispiel gelten (Fig. 24c).

Der Endabschnitt des Inlays 3 wird zum äußeren Rand der Längsschiene 5 hin von einem Falzrand 104 gebildet, der flächig auf der oberen Seite der Längsschiene 5 aufliegt und mit dem äußeren Rand der Längsschiene 5 bündig abschließt. Zur inneren Seite der Längsschiene 5 hin ist das Inlay 3 rechtwinklig nach unten abgewinkelt, so dass dieser Abschnitt eine Begrenzungswand 105 bildet, die flächig an der inneren Seite der Längsschiene 5 anliegt. Das Inlay 3 verläuft dann weiter nach unten, wo es schließlich um 180° gebogen bzw. gefalzt ist, um wieder nach oben zu verlaufen, um so eine Bördelleiste 106 zu bilden. Das Inlay 3 ist dann im rechten Winkel nach innen gebogen und bildet damit die Auflagefläche für die Backwaren, der seitlich durch die Begrenzungswand 105 begrenzt ist. Der Absatz der sich zwischen der oberen Fläche des Seitenprofils 5 und der Auflagefläche für die Backwaren bildet wird als die Begrenzungswand 105 bezeichnet und sie verhindert, dass Backwaren seitlich herunterfallen. Das Inlay 3 kann am Längsseitenprofil 5 mit Schrauben 101 durch die Bördelleiste 106 an der Innenseite des Längsseitenprofils 5 oder durch den Falzrand 104 von oben auf dem Längseitenprofil 5 befestigt werden. Die obere Seite eines oder beider Querseitenprofile 6 kann bündig mit der Höhe der Auflagefläche des Inlays 3 sein, so dass die Backwaren ohne Hindernis an einer Seite des Rahmens 2 an zumindest einer Querseite abrutschen können. Die Höhe des Längsseitenprofils 5, das die seitliche Begrenzungswand für die Backwaren bildet kann somit höher als die des Querseitenprofils 6 sein, über welches die Backwaren von dem Inlay 3 aus abrutschen können.

Das Inlay 3 kann aber auch auf der selben Ebene wie alle Falzränder 104 angeordnet sein, so dass das Inlay eine ebenflächige Oberfläche ausbildet.

Der Falzrand 104 und die Bördelleiste 106 können alternativ oder zusätzlich auch entlang den Querseitenprofilen 6 ausgebildet sein.

### Bezugszeichenliste

- 1: Backblech
- 2: Rahmen
- 3: Inlay
- 4: Gefache
- 5: Längsseitenprofilen
- 6: Querseitenprofilen
- 7: Schmalseitenwandungen
- 8: Breitseitenwandung
- 9: Stützprofil / Querstrebe
- 10: Stützblech / Längsstrebe
- 11: Scharte
- 12: Längsschienen
- 14: U-förmige Querschiene
- 16: obere Lasche
- 19: untere Lasche
- 23: Profilschiene
- 24: oberen Stege
- 25: Haltebleche
- 28: Halteblechs
- 30: Stützlasche
- 31: Haltewandung
- 32: Schraubbolzen
- 32a: Niete
- 33: Bodenwandung
- 34: Innenrahmen
- 35: Stapelecke
- 36: Bodenseite
- 37: Deckenseite
- 38: Zapfen
- 39: Ausnehmung
- 40: Gewindebohrungen
- 41: Schraubbolzen
- 42: Scharten
- 43: Lochblech
- 44: Leisten
- 45: Leistenabschnitt
- 46: Bördelabschnitt
- 47: Eckbereiche
- 48a: untere Bördelkante
- 48b: obere Bördelkante
- 49: Langlöcher
- 50: rohrförmigen Abschnitt
- 51: Stegen
- 52: untere Steg
- 53: Langloch
- 54: Einschnitte
- 55: Fixierwandung
- 56: Einschnitte
- 57: Längsstreben
- 58: Querstreben
- 59: federnde Druckstücke
- 60: sacklochförmigen Gehäuse
- 61: Kragen
- 62: Druckfeder
- 63: Kugel
- 64: Langlöcher
- 65: Versteifungsstange
- 66: Bodenwandung
- 67: U-Schenkeln
- 68: Aussparungen
- 69: Drahtgeflecht mit Längsdrähten
- 70: Querdrähten
- 71: Schraubenösen
- 42: Scharte
- 72: vertikaler Stützabschnitt
- 73: Langlöcher
- 74: Gewindebohrungen
- 76: Schraubbolzen
- 77: Lochbleches
- 78: Streckmetall
- 79: Gitternetz
- 80: Schlitz
- 81: Vorsprung
- 82: Auflagebereich
- 83: freie Kante
- 84: Profilelement
- 85: oberen Profilelementes
- 86: unteren Rahmenteil
- 87: oberen Rahmenteil
- 88: Spannschrägen
- 89: schlitzförmige Ausnehmung
- 90: Klemmvorsprung
- 91: Stützblech
- 92: Bodenwandung
- 93: Seitenwandung
- 94: Stirnwandung
- 95: verschweißte Kreuzungspunkte
- 96: Stabilisierungsecke
- 97: Profilrohr
- 98: Verbindungsblech
- 99: Bördelrand
- 100: Falzleiste
- 101: Schraube
- 102: Loch
- 103: Aussparung
- 104: Falzrand
- 105: Begrenzungswand
- 106: Bördelleiste

## Patentansprüche

1. Backblech für industriell betriebene Backanlagen umfassend einen Rahmen und ein Inlay, **dadurch gekennzeichnet,**
**dass** der Rahmen eine Gefache aus mehreren Quer- und Längsstreben zur Stützung des Inlays aufweist, wobei das Inlay aus einem Lochblech aus Aluminium oder einer Aluminiumlegierung mit ein Dicke von nicht mehr als 1,2 mm oder
aus einem Streckmetall aus Aluminium oder einer Aluminiumlegierung, oder
aus einem Gitternetz ausgebildet ist und das Gitternetz aus nicht-metallischen Filamenten ausgebildet ist.

2. Backblech nach Anspruch 1,
**dadurch gekennzeichnet,**
**dass** Querstreben nicht mehr als 40 cm und die Längsstreben nicht mehr als 30 cm von der nächsten benachbarten Strebe beabstandet sind.

3. Backblech nach Anspruch 1 oder 2,
**dadurch gekennzeichnet,**
**dass** das Lochblech mit ein Dicke von nicht mehr als 1,15 mm und vorzugsweise nicht mehr als 1,1 mm ausgebildet ist,

4. Backblech nach Anspruch 3,
**dadurch gekennzeichnet,**
**dass** das Gitternetz ein flexibles Gitternetz ist, das unter Spannung im Backblech angeordnet ist.

5. Backblech nach einem der Ansprüche 1 bis 4,
**dadurch gekennzeichnet,**
**dass** die nicht-metallischen Filamente Fasern, die in einen Kunstsoff eingebettet sind, umfassen.

6. Backblech nach einem der Ansprüche 1 bis 5,
**dadurch gekennzeichnet,**
**dass** die Quer- und/oder Längsstreben jeweils aus einer Metall- oder Kunststoffstrebe mit einem bestimmten Profil ausgebildet sind, wobei die Profile ein I-Profil, L-Profil, U-Profil oder ein Rundprofil sein können.

7. Backblech nach einem der Ansprüche 1 bis 6,
**dadurch gekennzeichnet,**
**dass** die Quer- und Längsstreben an ihren Kreuzungspunkten miteinander verbunden oder verschränkt sind.

8. Backblech nach einem der Ansprüche 1 bis 7,
**dadurch gekennzeichnet,**
**dass** das Gefache aus mehreren Quer- und Längsstreben in mehrere Segmente unterteilt ist, wobei die Quer- und Längsstreben eines jeden Segmentes miteinander verbunden sind und einen einteiligen Körper bilden.

9. Backblech nach einem der Ansprüche 1 bis 8,
**dadurch gekennzeichnet,**
**dass** das Backblech eine Breite von zumindest 0,6 m und/oder eine Länge von zumindest 0,8 m aufweist.

10. Backblech nach einem der Ansprüche 1 bis 9,
**dadurch gekennzeichnet,**
**dass** der Rahmen aus einem im Querschnitt rechteckigen Hohlprofil aus Stahl oder einem Hochtemperaturkunststoff ausgebildet ist, wobei das Hohlprofil zwei Breitseitenwandungen und zwei Schmalseitenwandungen aufweist, wobei die Breitseitenwandungen breiter als die Schmalseitenwandungen sind und die Schmalseitenwandungen etwa parallel zum Inlay und die Breitseitenwandungen etwa senkrecht zum Inlay angeordnet sind.

11. Backblech nach Anspruch 10,
**dadurch gekennzeichnet,**
**dass** die Breitseitenwandung des Rahmens eine Breite von zumindest 20 mm, insbesondere zumindest 25 mm bzw. zumindest 30 mm und/oder die Schmalseitenwandung des Rahmens eine Breite von zumindest 5 mm und insbesondere zumindest 10 mm und vorzugsweise nicht mehr als 20 mm und insbesondere nicht mehr als 15 mm aufweist.

12. Backblech nach einem der Ansprüche 1 bis 10,
**dadurch gekennzeichnet,**
**dass** das Inlay am Rahmen lösbar befestigt ist.

13. Backblech nach Anspruch 12,
**dadurch gekennzeichnet,**
**dass** das Inlay einen umlaufenden Steckrahmen aufweist, welcher lösbar mit dem Rahmen verbunden ist, wobei der Steckrahmen und der Rahmen ineinander steckbar ausgebildet sind, wobei der Steckrahmen insbesondere mittels einer Klemmverbindung, Rastverbindung oder Schraubverbindung am Rahmen befestigt ist.

14. Backblech nach einem der Ansprüche 1 bis 13,
**dadurch gekennzeichnet,**
**dass** das Inlay aus Streckmetall ausgebildet ist und eine abgewinkelte Falzleiste oder Bördelleiste zur Anlage einer nach innen weisenden Wandung der Querseitenprofile und/oder Längsseitenprofile aufweist.

15. Backblech nach einem der Ansprüche 1 bis 14,
**dadurch gekennzeichnet,**
**dass** das Inlay aus Streckmetall ausgebildet ist und einen Falzrand oder Bördelrand zur Anlage einer nach oben weisenden Wandung der Querseitenprofile und/oder Längsseitenprofile aufweist.
